# NEUE EUROPÄISCHE PATENTSCHRIFT

(11) **EP 3 490 921 B2**
(45) Veröffentlichungstag und Bekanntmachung des Hinweises auf die Entscheidung über den Einspruch: **26.11.2025**
(45) Hinweis auf die Patenterteilung: 27.11.2019
(21) Anmeldenummer: 18722031.4
(22) Anmeldetag: 03.05.2018
(51) Int. Cl.: B66C 13/12, B66C 19/00, H02G 11/00, H02G 11/02

(54) **VERBINDUNGSVORRICHTUNG, ENERGIEVERSORGUNGSSYSTEM UND VERFAHREN ZUM VERBINDEN EINES LEITUNGSKABELS MIT DER VERBINDUNGSVORRICHTUNG**
CONNECTING DEVICE, POWER SUPPLY SYSTEM AND METHOD FOR CONNECTING AN ENERGY CABLE WITH THE CONNECTING DEVICE
DISPOSITIF DE CONNEXION, SYSTÈME D'ALIMENTATION EN ÉNERGIE ET MÉTHODE POUR CONNECTER UN CÂBLE D'ALIMENTATION AVEC LE DISPOSITIF DE CONNEXION

(30) Priorität: 09.05.2017 DE 102017109988
(43) Veröffentlichungstag der Anmeldung: 05.06.2019
(73) Patentinhaber: Conductix-Wampfler GmbH, 79576 Weil am Rhein-Märkt (DE)
(72) Erfinder: MAIER, Bernd, 79418 Schliengen (DE); KREITER, Frank, 79429 Malsburg (DE); NÖLTNER, Martin, 79541 Lörrach-Haagen (DE); LANG, Dietmar, 79418 Schliengen (DE)
(74) Vertreter: Charrier Rapp & Liebau
(86) Internationale Anmeldenummer: PCT/EP2018/061359
(87) Internationale Veröffentlichungsnummer: WO 2018/206393

(56) Entgegenhaltungen:
- WO-A1-2014/131826
- CN-U- 202 142 764
- CN-U- 205 634 666
- DE-A1- 102008 024 572
- DE-A1- 102011 002 334
- DE-U1- 202015 004 918
- US-A- 5 306 999
- "ABB to power world's largest emission-free electric ferries and deliver first automated shore-side charging Station", PRESS RELEASE, 21 June 2016 (2016-06-21), XP055751161
- Youtube Video / Werbefilm im Zusammenhang mit :https://www.youtube.com/watch ?v=qGuto8iiQjkTitel: „Introducing ABB’s groundbreaking shore connectionrobot“

## Beschreibung

Die Erfindung betrifft ein Energieversorgungssystem nach dem Oberbegriff des Anspruchs 1 sowie ein Verfahren zum Verbinden eines Leitungskabels mit der Verbindungsvorrichtung nach dem Oberbegriff des Anspruchs 16.

Aus der DE 20 2006 009 750 U1 ist ein Container-Ladekran bekannt, an dem eine Leitungskabeltrommel zum Auf- und Abwickeln eines Leitungskabel vorgesehen ist. Dabei ist das Leitungskabel mit einer ortsfesten Speisestelle verbunden, gegenüber der der Ladekran in eine Längsrichtung verfährt. Je nach Verfahrposition wird dabei das Leitungskabel von der Leitungskabeltrommel auf- oder abgerollt. Dies weist den Nachteil auf, dass der Leitungskran fest an eine Trasse gebunden ist, entlang deren er in Längsrichtung vor- und zurückfährt. Deshalb waren lange Zeit die Krane auf Schienen montiert und fest mit einer Einspeisestelle verbunden.

Da Krane vermehrt nicht nur längs eines einzigen Containerstapelplatzes verfahren sollen, sondern auch zwischen seitlich und in Längsrichtung zueinander versetzten unterschiedlichen Stapelplätzen, können sie nicht mehr fest mit einer einzigen, dem jeweiligen Containerstapelplatz zugeordneten Einspeisestelle verbunden werden. Vielmehr müssen sie flexibel mit unterschiedlichen Einspeisestellen verbindbar sein.

Um dies zu ermöglichen, sieht die WO 2014/131826 A1 eine Vorrichtung zum automatischen Verbinden eines Krans mit einer elektrischen Leistungsversorgung vor, wobei die am Kran mitgeführte Verbindungsleitung endseitig mit einem Stecker versehen ist, welcher in eine in einem Erdloch versenkte Dockingstation eingesteckt wird. Dabei weist die Dockingstation zwei voneinander beabstandete senkrechte Stangen auf, welche beim Einführen des Steckers in die Dockingstation in Führungsöffnungen des Steckers eindringen. Weiter ist dort eine automatische Verriegelung in dem Erdloch vorgesehen, um den Stecker an der Dockingstation zu fixieren.

Das Leitungskabel steht von der Dockingstation senkrecht nach oben ab und legt sich dann, wenn der Kran sich weiter von der Dockingstation entfernt, auf dem Boden in Längsrichtung neben dem Kran ab. Dabei soll das Leitungskabel möglichst gleichmäßig gebogen und ein minimaler Biegeradius des Leitungskabels nicht unterschritten werden. Weiter ist eine Zugentlastung vorgesehen, um beim Ziehen bzw. Aufrollen des Leitungskabels die darin geführten elektrischen Leitungen nicht zu beschädigen. Deshalb wird bei der bekannten Vorrichtung zusätzlich eine Leitungskabeltraganordnung mitgeführt, um welche das vom Stecker im Boden kommende Leitungskabel gelegt wird. Die Leitungskabeltraganordnung wird zusammen mit dem Stecker an der Dockingstation abgesetzt. Dies weist den Nachteil auf, dass entweder eine Bedienperson das Leitungskabel um die Leitungskabeltraganordnung legen muss, oder das Leitungskabel bereits vorher darauf aufgerollt sein muss. Zudem ist die Leitungskabeltraganordnung aufwendig und baut groß und schwer, so dass die Vorrichtung zum Absetzen und Aufnehmen des Steckers und der Leitungskabeltraganordnung ausreichend robust und antriebsstark ausgelegt werden muss. Auch ist die gesamte am Kran mitzuführende Anordnung schwer und erhöht somit das Gewicht des Krans, so dass dessen Fahrantrieb stärker ausgelegt werden muss. Zudem baut diese Anordnung groß, so dass sie viel Bauraum am Kran benötigt und die Breite des Krans vergrößert.

Die US 2013/0076902 A2 offenbart eine Roboterladestation zum Laden einer Batterie eines Elektrofahrzeugs umfassend eine Basisplatte, einen Pfosten, der mit der Basisplatte gekoppelt ist und sich im Wesentlichen senkrecht zur Basisplatte erstreckt, und einen Roboterarm. Der Roboterarm erstreckt sich vom Pfosten und trägt ein Greiforgan. Das Greiforgan umfasst eine Mehrzahl von elektrischen Kontakten, die konfiguriert sind, um mit einer an dem Elektrofahrzeug angeordneten Aufnahme verbunden zu werden. Der Roboterarm ist so ausgebildet, dass er das Greiforgan in drei Bewegungsgraden bewegt.

Die DE 38 15 033 C1 offenbart eine Einrichtung zum fernhantierten Kuppeln einer Elektrosteckverbindung, welche mit einem Kran arbeitet. An einer Kranhakenflasche ist ein erstes Steckerteil angebracht. Ein zweites Steckerteil, das über ein Kabel mit einem Stromverbraucher verbunden ist, ist in einer Halterung gehalten, die für eine vertikale Ausrichtung des Steckerteiles sorgt und die Reaktionskräfte beim Kuppeln und Entkuppeln aufnimmt. Durch Verfahren in einer horizontalen Ebene wird das Steckerteil aus der Halterung entnommen, worauf der Kranhaken eine Öse des Betriebsmittels ergreift.

Die US 9,620,896 B1 offenbart ein zweiseitiges elektrisches Verbindungssystem, das automatisch zwei Verbinderseiten miteinander verbindet. Eine männliche Seite und eine weibliche Seite des Verbinders haben Körper, die so geformt sind, dass die männliche Seite automatisch durch die Schwerkraft von der weiblichen Seite aufgenommen werden kann. Die Führungsstruktur um die weibliche Seite des zweiseitigen Verbinders ermöglicht, dass die männliche Seite an Ort und Stelle geführt wird, ohne dass eine perfekte Ausrichtung der zwei Seiten des Verbinders erforderlich ist.

Die CN 202142764 U betrifft das technische Gebiet der Energieversorgung eines Reifenkrans in einem Docklagebereich, und insbesondere eine automatische Anschaltvorrichtung der Kabeltrommel des Reifenkrans in Containerlagerhöfen. Die Stromversorgung kann ohne Arbeiter erfolgen, wozu eine automatische Verbindungseinschaltvorrichtung ein Stromversorgungsanschlußsystem, ein Kabel, das mit dem Reifenkran verbunden ist, einen Kabelstecker am hinteren Ende des Kabels und eine Kabelsteckerbewegungsvorrichtung, die am Reifenkran befestigt ist, umfasst.

Die DE 20 2015 004 918 U1 offenbart eine Ankoppelungseinheit zur Einkoppelung eines frei fahrbaren Gerätes an ein Energiekettensystem, wobei elektrische Leitungen, Lichtwellenleiter oder Schläuche durch Steckerteile miteinander temporär verbindbar sind, wobei das Energiekettensystem fest mit einem Koppelwagen verbunden ist, der ein erstes Steckerteil aufweist, das mit einem an einem zugfesten Schlauch, Kabel oder einer Gliederkette des Gerätes angeordneten zweiten Steckerteil verbindbar ist, und der parallel zum Verfahrweg des Gerätes verfahrbar ist. Dabei ist die Ankoppelungseinheit mit dem zweiten Steckerteil in Richtung auf den Koppelwagen ausfahrbar, so dass die beiden Steckerteile horizontal und vertikal zueinander positionierbar und miteinander verbindbar sind, und die Ankoppelungseinheit nach Verbindung der beiden Steckerteile zurückfahrbar ist, so dass das Gerät und der Koppelwagen zugfest und flexibel über den zugfesten Schlauch, das Kabel oder die Gliederkette miteinander verbunden sind.

Die US 5 306 999 A betrifft eine Ladestation zum Aufladen eines Elektrofahrzeugs. Die Elektrofahrzeug-Ladestation hat eine Basiseinheit mit einem Steuerkasten, der elektrisch mit einer elektrischen Stromleitung gekoppelt ist, und einer einziehbaren Tragarmanordnung mit einem elektrischen Leiter und einem damit verbundenen elektrischen Verbinder zur Bewegung zwischen einer eingefahrenen Position und einer ausgefahrenen Position.

Aufgabe der vorliegenden Erfindung ist es deshalb, die oben genannten Nachteile zu beseitigen und das automatische Verbinden eines Leitungskabels mit einer am Boden angeordneten Einspeiseeinrichtung zu vereinfachen. Bevorzugt soll auch eine schonende Führung und Ablage des Leitungskabels ermöglicht werden, und insbesondere die Gefahr eines Abknickens oder einer zu starken Abkrümmung des Leitungskabels beim Verfahren des elektrischen Verbrauchers verringert werden.

Die Erfindung löst diese Aufgabe durch ein Energieversorgungssystem mit den Merkmalen des Anspruchs 1 und ein Verfahren zum Verbinden eines Leitungskabels mit der Verbindungsvorrichtung mit den Merkmalen des Anspruchs 16. Vorteilhafte Weiterbildungen und Ausgestaltungen der Erfindung sind in den Unteransprüchen angegeben.

Die Verbindungsvorrichtung ist an der Einspeiseeinrichtung angeordnet.
Der Manipulator kann zum Greifen und Führen des Leitungskabels und/oder des Verbindungselements in mindestens eine horizontale Zustellrichtung und/oder eine vertikale Zustellrichtung bewegbar sein. Bevorzugt kann der Manipulator um eine vertikale Achse drehbar sein.

Bevorzugt kann der Manipulator vorteilhaft eine Greifvorrichtung zum Greifen des Leitungskabels und/oder des Verbindungselements aufweisen. Insbesondere kann die Greifvorrichtung eine insbesondere trichterförmige Einführöffnung für das Leitungskabel und/oder das Verbindungselement aufweisen. Bevorzugt kann die Greifvorrichtung eine Arretiervorrichtung zum lösbaren Halten des Leitungskabels und/oder des Verbindungselements an der Greifvorrichtung aufweisen.

Weiter kann die Verbindungsvorrichtung eine Führung aufweisen, welche die Greifvorrichtung bei einer Bewegung des Manipulators in einem gegenüber dem Anschluss weitgehend gleichbleibenden Neigungswinkel hält. Bevorzugt kann der Manipulator einen unteren Manipulatorarm und einen oberen Manipulatorarm aufweisen, wobei mindestens einer davon als Parallelogrammführung ausgebildet ist.

Bevorzugt kann das Reservoir dabei eine motorisch antreibbare Kabeltrommel sein, wobei das Leitungskabel vorteilhaft nur aufeinander, nicht aber seitlich nebeneinander aufgewickelt wird. Weiter kann vorteilhaft eine Ablagerichtung des Leitungskabels von der Einspeiseeinrichtung zu einem Austritt des **Leitungskabels** aus einer am Verbraucher angeordneten Kabelführungsvorrichtung verlaufen, wobei vorteilhaft die Fahrrichtung und die Ablagerichtung nur gering voneinander abweichen, insbesondere nicht mehr als 15°.

Der Anschluss ist um mindestens eine Schwenkachse drehbar Insbesondere kann die Schwenkachse quer zur Fahrrichtung bzw. einer von der Einspeiseeinrichtung zum verfahrbaren Verbraucher verlaufenden Ablagerichtung des Leitungskabels verlaufen. Weiter kann die Schwenkachse im wesentlichen parallel zu einem für die Ablage des Leitungskabels vorgesehenen Boden verlaufen, also in horizontaler Richtung. Weiter kann der Anschluss um eine im wesentlichen senkrecht zu einem für die Ablage des Leitungskabels vorgesehenen Boden verlaufende weitere Schwenkachse schwenkbar sein. Weiter kann vorteilhaft ein Schwenkwinkel um die mindestens eine Schwenkachse höchstens 225°, bevorzugt höchstens 190° und besonders bevorzugt höchstens 160° beträgt.

Bevorzugt kann die Einspeiseeinrichtung eine Haltevorrichtung zum Halten des Anschlusses in einer Ruhestellung aufweisen. Weiter kann dabei vorteilhaft das Leitungskabel in der Ruhestellung nach oben ragen. Insbesondere von Vorteil kann der Anschluss in beide Drehrichtungen der Schwenkachse aus der Ruhestellung auslenkbar sein, so dass der Verbraucher an der Einspeiseeinrichtung vorbeifahren kann. Dabei kann vorteilhaft eine Rückführvorrichtung vorgesehen sein, um den Anschluss von einer aus der Ruhestellung ausgelenkten Stellung in die Ruhestellung zurück zu bewegen, wobei vorteilhaft eine Anschlussarretierung zum Arretieren des Anschlusses in der Ruhestellung vorgesehen sein kann. Zudem kann auch bevorzugt eine Steckerverriegelung zum Verriegeln des Verbindungselements am Anschluss vorgesehen sein, um eine ungewolltes Lösen des Verbindungselements während der Energie- und/oder Datenübertragung zu verhindern.

Bevorzugt kann ein der Verbindungsvorrichtung oder der Einspeisevorrichtung zugeordnetes, und insbesondere dort angeordnetes, Positionselement vorgesehen sein, welches durch eine am Verbraucher angeordnete Sensoreinheit detektierbar ist. Hierdurch kann die Positionierung des verfahrbaren Verbrauchers gegenüber der Verbindungsvorrichtung und insbesondere gegenüber dem Manipulator vereinfacht werden, so dass der Manipulator das Leitungskabel und/oder das Verbindungselement sicher und schnell greifen kann. Ggf. kann die Anordnung des Positionselements und der Sensoreinheit auch vertauscht werden, so dass das Positionselement am Verbraucher angeordnet wird und die Sensoreinheit an der Verbindungsvorrichtung oder der Einspeisevorrichtung.

Bevorzugt kann dabei das Positionselement einen QR-Code und/oder mindestens einen reflektierenden Bereich zur Erfassung durch die Sensoreinheit aufweisen. Auch kann das Positionselement in Fahrrichtung des Verbrauchers zueinander versetzte reflektierende Bereiche und/oder Bereiche mit unterschiedlichen Reflexionseigenschaften aufweisen. Weiter können vorteilhaft die reflektierenden Bereiche und/oder Bereiche mit unterschiedlichen Reflexionseigenschaften quer zur Fahrrichtung, insbesondere in horizontaler Zustellrichtung des Manipulators, zueinander versetzt sein. In einer bevorzugten Ausgestaltung kann das Positionselement einen, insbesondere in eine horizontale Zustellrichtung des Manipulators vorderen, Zentralbereich und mindestens einen sich daran in Fahrrichtung anschließenden, gegenüber dem Zentralbereich in horizontaler Zustellrichtung nach hinten und/oder nach vorne versetzten Randbereich aufweisen.

Weiter kann vorteilhaft die Sensoreinheit eingerichtet sein, um den mindestens einen reflektierenden Bereich zu detektieren, und/oder zur Abstandsmessung eingerichtet sein.

Ein eingangs genanntes Verfahren zum Verbinden eines an einem elektrischen Verbraucher, insbesondere einem Ladekran, angeordneten Leitungskabels mit einer Einspeiseeinrichtung ist erfindungsgemäß gekennzeichnet durch die Schritte a) Positionieren eines Verbindungselements des Leitungskabels gegenüber der Einspeiseeinrichtung, b) Greifen des Verbindungselements und/oder des Leitungskabels durch einen Manipulator einer an der Einspeisevorrichtung angeordneten Verbindungsvorrichtung, c) Verbinden des Verbindungselements mit einem Anschluss der Einspeiseeinrichtung mittels des Manipulators.

Die Erfindung wird nachfolgend anhand von detaillierten Ausführungsbeispielen mit Bezug auf die begleitenden Zeichnungen beschrieben. Diese zeigen:
- **Fig. 1**: eine schematische Seitenansicht auf ein Energieversorgungssystem für einen Containerkran;
- **Fig. 2**: eine schematische dreidimensionale Ansicht auf einen Ausschnitt aus Fig. 1 mit einer ersten Verbindungsvorrichtung;
- **Fig. 3**: eine schematische dreidimensionale Ansicht auf einen Manipulatorarm der Verbindungsvorrichtung aus Fig. 2 beim Greifen eines Verbindungssteckers;
- **Fig. 4**: der Manipulatorarm aus Fig. 3 beim Verbinden des Verbindungssteckers mit einem Steckanschluss einer Einspeiseeinrichtung;
- **Fig. 5**: den Manipulatorarm aus Fig. 3 in einer zurückgezogenen Stellung nach dem Loslassen des Verbindungssteckers;
- **Fig. 6**: die Ansicht aus Fig. 5 mit dem durch das Verfahren des Krans aus der Ruhstellung geschwenkten Steckanschluss;
- **Fig. 7**: eine Detailansicht auf einen Teil der Einspeiseeinrichtung aus Fig. 2 bis 6;
- **Fig. 8**: eine schematische dreidimensionale Ansicht auf einen Ausschnitt aus Fig. 1 mit einer alternativ ausgestalteten zweiten Verbindungsvorrichtung vor dem Greifen eines Verbindungssteckers;
- **Fig. 9**: eine schematische dreidimensionale Ansicht auf einen Manipulatorarm der Verbindungsvorrichtung aus Fig. 8 beim Greifen des Verbindungssteckers;
- **Fig. 10**: die Ansicht aus Fig. 9 mit dem Manipulatorarm aus Fig. 9 beim Zuführen des Verbindungssteckers zu einem Steckanschluss der Einspeiseeinrichtung;
- **Fig. 11**: die Ansicht aus Fig. 9 mit dem Manipulatorarm aus Fig. 9 beim Verbinden des Verbindungssteckers mit dem Steckanschluss;
- **Fig. 12**: die Ansicht aus Fig. 9 mit dem Manipulatorarm aus Fig. 9 in einer zurückgezogenen Stellung nach dem Loslassen des Verbindungssteckers;
- **Fig. 13**: die Ansicht aus Fig. 12 mit aus der Ruhstellung geschwenktem Steckanschluss;
- **Fig. 14**: eine vergrößerte Detailansicht der Einspeiseeinrichtung und Verbindungsvorrichtung aus Fig. 9 mit dem Steckanschluss in Ruhestellung;
- **Fig. 15**: die Detailansicht aus Fig. 14 mit aus der Ruhstellung geschwenktem Steckanschluss gemäß Fig. 13;
- **Fig. 16**: eine Seitenansicht auf die z.T. aufgeschnittene Darstellung der Einspeiseeinrichtung und Verbindungsvorrichtung aus Fig. 14 von in Fig. 14 links oben;
- **Fig. 17**: die Seitenansicht aus Fig. 16 mit aus der Ruhestellung geschwenktem Steckanschluss entsprechend Fig. 15;
- **Fig. 18**: eine Seitenansicht auf die z.T. aufgeschnittene Darstellung der Einspeiseeinrichtung und Verbindungsvorrichtung aus Fig. 14 von in Fig. 14 links unten;
- **Fig. 19**: eine schematische Detailansicht einer Steckerverriegelung der Verbindungsvorrichtung aus Fig. 18 von schräg oben;
- **Fig. 20**: eine schematische Detailansicht der Steckerverriegelung aus Fig. 18 und 19 von unten;
- **Fig. 21**: eine Querschnittsansicht durch ein Leitungskabel;
- **Fig. 22**: eine vergrößerte schematische dreidimensionale Detailansicht eines geöffneten Verbindungssteckers aus einer ersten schrägseitlichen Perspektive;
- **Fig. 23**: eine schematische dreidimensionale Ansicht des Verbindungssteckers aus Fig. 22 aus einer zweiten schrägseitlichen Perspektive;
- **Fig. 24**: eine schematische dreidimensionale Ansicht des Verbindungssteckers aus Fig. 22 aus einer dritten Perspektive von schräg unten;
- **Fig. 25**: eine schematische dreidimensionale Ansicht einer Kabelführungsvorrichtung aus Fig. 9 bis 12;
- **Fig. 26**: eine Seitenansicht der Kabelführungsvorrichtung aus Fig. 25 von in Fig. 25 links;
- **Fig. 27**: eine Vorderansicht der Kabelführungsvorrichtung aus Fig. 25 mit einem höhenverstellbaren Pendel in einer ersten, unteren Stellung;
- **Fig. 28**: eine Vorderansicht der Kabelführungsvorrichtung aus Fig. 25 mit dem höhenverstellbaren Pendel in einer zweiten, oberen Stellung;
- **Fig. 29**: eine schematische dreidimensionale Ansicht einer alternativen Kabelführungsvorrichtung;
- **Fig. 30**: einen Teil der schematischen dreidimensionale Ansicht aus Fig. 29 aus einer anderen Perspektive.

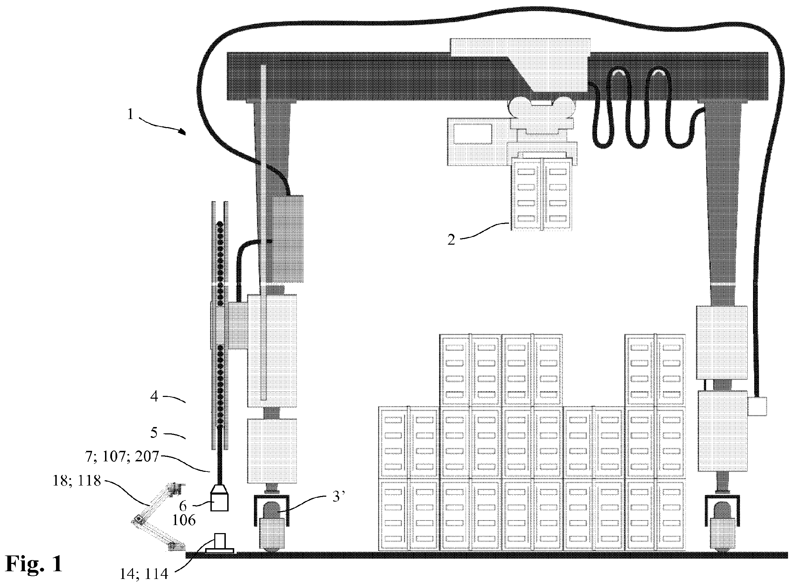

In Fig. 1 ist ein an sich bekannter Kran 1 zum Umsetzen von auf einem Containerstapelplatz gelagerten Containern 2 gezeigt, wie er auf großen Umsetzanlagen, insbesondere in Häfen, verwendet wird. Der Kran 1 kann auf Rädern 3, 3' in eine Fahrrichtung F in einer Fahrgasse neben dem Containerstapelplatz verfahren, welche in der Regel parallel zu den abgestellten Containern 2 verläuft. In der Regel sind in Umsetzanlagen mehrere derartige Containerstapelplätze nebeneinander und ggf. auch hintereinander angeordnet, wobei der Kran 1 und auch andere Kräne zwischen den einzelnen Containerstapelplätzen verfahren werden können.

Um den Kran 1 und die darauf installierten elektrischen Anlagen, z.B. die Motoren für das Anheben und Bewegen der Container 2 wie auch die elektrischen Fahrantriebe der Räder 3, 3' mit elektrischer Energie zu versorgen, und/oder ggf. Daten von und zum Kran 1 zu übertragen, ist auf der Außenseite des Krans 1 eine Leitungskabeltrommel 4 angeordnet, von der ein elektrisches Leitungskabel 5 in eine Ablagerichtung auf- und abgerollt werden kann, entsprechend des Verfahrwegs des Krans 1 in Fahrrichtung F. Üblicherweise stimmen die Ablagerichtung und die Fahrrichtung F überein oder weisen allenfalls geringfügig voneinander ab, da das Leitungskabel 5 bevorzugt parallel zur Fahrrichtung F abgelegt wird. Die Ablage des Leitungskabels 5 erfolgt dabei entsprechend des Verfahrwegs des Krans 1, welcher über die Länge des Verfahrwegs üblicherweise auch geringfügig von der idealen, parallel zu den Containern 2 verlaufenden Linie abweicht. Insofern bedeutet "parallel" hier und im nachfolgenden keine exakte mathematische Parallelität an jedem Punkt des Verfahrwegs, sondern dass das Leitungskabel 5 im Rahmen der Fahr- und Ablageungenauigkeiten neben dem Containerstapelplatz abgelegt wird. Obiges ist an sich bekannt.

Am frei nach unten hängenden Ende weist das Leitungskabel 5 ein als Verbindungsstecker 6 bzw. 106 ausgebildetes Verbindungselement auf, der zur Ablage am Boden wie auch zum Einholen auf die Kabeltrommel 4 mittels einer am Kran 1 angeordneten Kabelführungsvorrichtung 7 bzw. 107 sauber und möglichst spannungsfrei geführt werden kann.

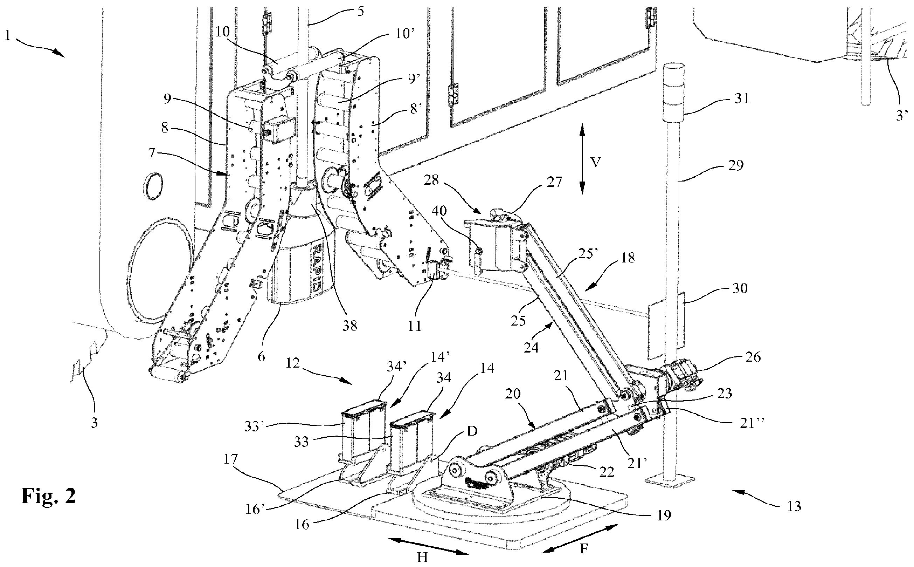

In der detaillierten schematischen dreidimensionalen Ansicht eines ersten Ausführungsbeispiels in Fig. 2 ist nochmals ein Ausschnitt des Krans 1 und der Räder 3, 3' schräg von der Seite gezeigt. Dort ist auch die Kabelführungsvorrichtung 7 im Detail gezeigt, mit der das Leitungskabel 5 sauber und mit möglichst geringen Kraft- und Spannungseinträgen am Boden abgelegt werden kann. Die Kabelführungsvorrichtung 7 weist zwei einander gegenüberliegende und in Fahrrichtung F des Krans 1 versetzte, sich nach unten aufweitende Rollenbögen 8, 8' auf. In den Rollenbögen 8, 8' sind eine Vielzahl von frei drehbaren Längsführungsrollen 9, 9' vorgesehen, an denen das Leitungskabel 5 mit möglichst wenig Reibung entlang geführt werden kann. In seitlicher Richtung H quer zu Fahrrichtung F, erfolgt die Führung des Leitungskabels 5 mittels zweier Seitenführungsrollen 10, 10', welche oberhalb der Rollenbögen 8, 8' angeordnet sind und diese im vorliegenden Ausführungsbeispiel verbinden, was aber nicht notwendig ist. Am in Fig. 2 rechten Rollenbogen 8' ist am unteren Ende eine Sensoreinheit 11 angeordnet, deren Funktion später erläutert wird. Der Sensor 11 könnte aber auch an einer Stelle der Kabelführungsvorrichtung 7 oder auch am Kran 1 angeordnet sein, und könnte auch kabellos mit der Steuerung verbunden sein.

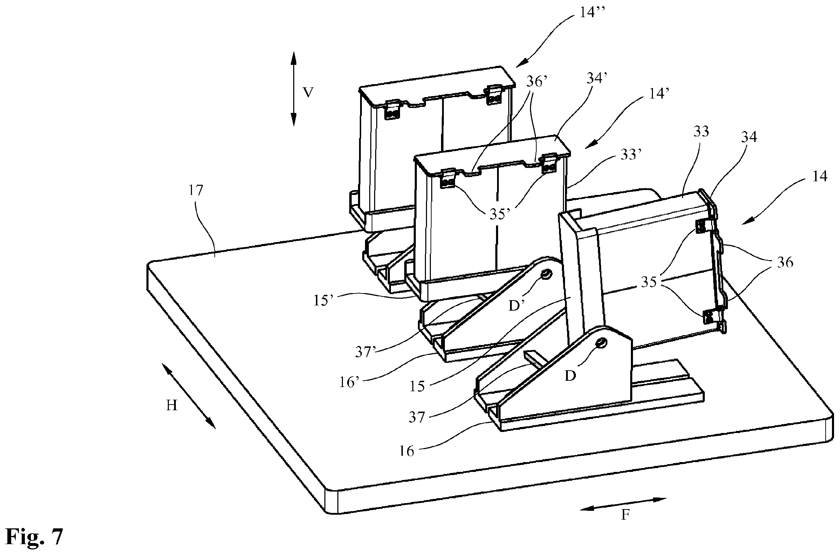

Zur Verbindung des Verbindungssteckers 6 mit einer nicht im Detail gezeichneten elektrischen Spannungsversorgung ist eine ortsfest neben der Fahrgasse des Containerkrans 1 angeordnete Einspeiseeinrichtung 12 mit einer dort angeordneten Verbindungsvorrichtung 13 vorgesehen. Die Einspeiseeinrichtung 12 weist im vorliegenden Fall zwei als Steckanschlüsse 14, 14' ausgebildete Anschlüsse auf, welche mittels zweier als Schwenkplatten 15, 15' ausgebildeter Anschlussteile um als Drehachsen D, D' (siehe Fig. 7) ausgebildete Schwenkachsen drehbar an Lagern 16, 16' angelenkt sind. Die Lager 16, 16' sind am Boden bzw. einem auf dem Boden angebrachten Befestigungselement, insbesondere einer Befestigungsplatte 17, befestigt, welche ihrerseits üblicherweise auf einem festen Fundament befestigt ist. Die Funktion der drehbaren Lagerung wird später anhand von Fig. 7 detailliert beschrieben. Es können aber auch mehr oder weniger Steckanschlüsse an einer Einspeiseeinrichtung vorgesehen sein.

Die Verbindungsvorrichtung 13 weist einen Manipulator 18 auf, welcher zum Greifen und aktiven Bewegen des Verbindungssteckers 6 und zur Herstellung einer Verbindung des Verbindungssteckers 6 mit dem Steckanschluss 14 ausgebildet ist. Dabei weist der Manipulator 18 eine Manipulatorbasis 19 auf, an der ein unterer Manipulatorarm 20 mit vier unteren Teilarmen 21, 21', 21" angelenkt ist, von denen in den Fig. 2 bis 6 zwei ganz und einer teilweise verdeckt sichtbar sind. Der Manipulatorarm 20 kann über einen unteren Manipulatorantrieb 22 bewegt werden, welcher den Teilarm 21" und bevorzugt auch den Teilarm 21' dreht.

An ihrem anderen, oberen Ende sind die unteren vier Teilarme 21, 21', 21" dann so mit einem kreuzförmigen Verbindungsstück 23 verbunden, dass die Teilarme 21, 21' 21" eine erste Parallelogrammführung ausbilden. Weiter schließt sich ein oberer Manipulatorarm 24 daran an, welcher mit zwei oberen Manipulatorarmen 25, 25' an zwei anderen, zu den Gelenkanschlüssen der unteren Teilarme 21, 21', 21''' kreuzförmig versetzten Gelenkanschlüssen des Verbindungsstücks 23 drehbar angelenkt ist. An ihren vorderen, oberen Enden sind die Manipulatorarme 25, 25' wiederum parallelogrammartig miteinander verbunden. Der obere Teilarm 25' kann über einen oberen Manipulatorantrieb 26 um seine unteren Gelenkachsen gedreht werden.

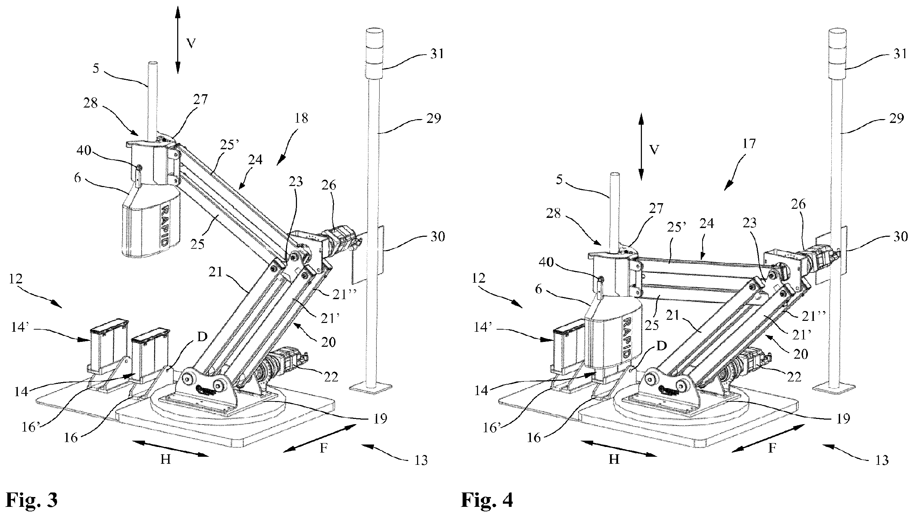

An seinem vorderen oberen Ende ist der obere Manipulatorarm 24 mit einer Greifvorrichtung 27 für den Verbindungsstecker 6 ausgerüstet, um den Verbindungsstecker 6 mittels des nur in horizontaler Zustellrichtung H und vertikaler Zustellrichtung V bewegbaren Manipulator 18 sauber gegenüber dem Steckanschluss 14 positionieren zu können. Die Greifvorrichtung 27 weist eine trichterförmige Einführöffnung 28 auf, um den Verbindungsstecker 6 wie in Fig. 4 gezeigt sicher greifen und bewegen zu können. Dies wird später noch detailliert erläutert.

Um den Verbindungsstecker 6 so gegenüber dem nur in horizontaler Zustellrichtung H quer zur Fahrrichtung F des Krans 1 bewegbaren Manipulator 18 so positionieren zu können, dass die Greifvorrichtung 27 den Verbindungsstecker 6 sicher greifen kann, ist ein Signalmast 29 neben der Verbindungsvorrichtung 13 montiert. Der Signalmast 29 weist ein als Identifikatorplatte 30 ausgebildetes Positionselement auf. Die am in Fig. 2 rechten, unteren Ende des Rollenbogens 8 angeordnete Sensoreinheit 11 detektiert, ob sich die Identifikatorplatte 30 gegenüber der Sensoreinheit 11 in einer Stellung befindet, in der der Manipulator 18 den Verbindungsstecker 6 greifen kann. Falls ja, wird der Greifvorgang durch den Manipulator 18 ausgelöst, der unterschiedliche Abstände in horizontaler Zustellrichtung H in einem gewissen Rahmen ausgleichen kann.

Beispielsweise kann hierzu geprüft werden, ob sich die Identifikatorplatte 30 im Messbereich der Sensoreinheit 11 befindet oder nicht. So kann die Identifikatorplatte 30 einen großflächigen QR-Code und die Sensoreinheit 11 einen sehr schmalen Messbereich aufweisen, innerhalb dessen der QR-Code liegen muss. Alternativ oder zusätzlich kann die Identifikatorplatte 30 auch eine Reflektorfolie mit bekannten Abmessungen und Position aufweisen, wobei dann mit der Sensoreinheit 11 bevorzugt der Abstand hierzu gemessen wird. Sobald der Beginn der Reflektorfolie detektiert wird, kann dann aus den bekannten Abmessungen die Position des Krans 1 bzw. der Kabelführungsvorrichtung 7 gegenüber dem Manipulator 18 bestimmt werden. Dabei kann die Abstandsmessung auch dazu dienen, den Verbindungsstecker 6 schnell und mit möglichst genauem Abstand durch den Manipulator 18 greifen zu können.

Da die Einführöffnung 28 trichterförmig ist, kann ein gewisser Versatz des Verbindungssteckers 6 in Fahrrichtung F auch bei nicht ganz exakter Positionierung des Krans 1 gegenüber der Einführöffnung 28 ausgeglichen werden.

Um dem Fahrer oder Bedienpersonal des Krans 1 die saubere Positionierung und ggf. die sicher hergestellte Verbindung zwischen Verbindungsstecker 6 und Steckanschluss 14 zu signalisieren, ist am oberen Ende des Signalmast 29 eine Signalleuchte 31 mit den klassischen Ampelsignalfarben rot, gelb und grün gut sichtbar angebracht. Rot signalisiert dann, dass noch keine Verbindung hergestellt wurde, Gelb die Verbindungsherstellung und Grün die hergestellte Verbindung und den Rückzug des Manipulators 18, also die Freigabe für das weitere Verfahren. Es können aber auch andere Farben oder Leuchtsignale wie langsames und schnelles Blinken o.ä. verwendet werden. Alternativ kann dem Fahrer durch die Signalleuchte 31 auch angezeigt werden, ob an der Einspeiseeinrichtung 12 noch ein Steckanschluss 14, 14' frei ist oder nicht: Rot signalisiert dann keinen und Grün einen freien Steckanschluss, während Gelb dann signalisiert, dass an der Einspeiseeinrichtung gerade eine Verbindung hergestellt wird.

Der Vorgang des Greifens und Verbindens des Verbindungssteckers 6 mit dem Steckanschluss 14 wird nachfolgend exemplarisch anhand Fig. 3 bis 6 beschrieben.

In Fig. 3 ist der Kran 1 bereits in die bezüglich der Verbindungsvorrichtung 13 günstige Position gefahren und der Manipulatorarm 18 hat den Verbindungsstecker 6 bereits mit der Greifvorrichtung 27 gegriffen. Vorher fährt der Manipulator 18 mit der Greifvorrichtung 27 auf das Leitungskabel 5 oberhalb des Verbindungssteckers 6 zu und umgreift diese. Anschließend fährt die Greifvorrichtung 27 von oben über ein oberes, zylindrisches Greifteil 38 des Verbindungssteckers 6 bis zu einem nicht erkennbaren Anschlag nach unten, bis eine Greifarretierung den Verbindungsstecker 6 an der Greifvorrichtung 27 feststellt.

Dabei weist das Greifteil 38 einen in Fig. 2 gut erkennbaren Zentriertrichter 39 auf, in den einander gegenüberliegende, in der trichterförmigen Einführöffnung 28 angeordnete Zentrierdorne 40 eingreifen. Dabei ist in Fig. 2 außenseitig an der Greifvorrichtung 27 in seiner Position angedeuteter Zentrierdorn 40 dargestellt. Hierdurch kann vorteilhaft erreicht werden, dass der von der Greifvorrichtung 27 gehaltene Verbindungsstecker 6 so ausgerichtet wird, dass er sauber auf einen der Steckanschlüsse 14, 14' aufgesteckt werden kann.

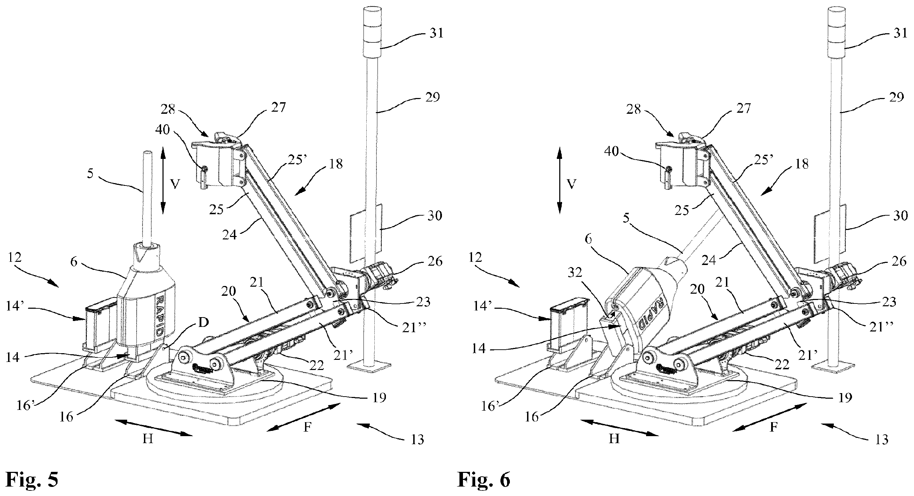

Anschließend bewegt der Manipulator 18, wie in Fig. 3 gezeigt, durch Drehung des oberen Manipulatorarmantriebs 26 und ggf. des unteren Manipulatorarmantriebs 22 den Verbindungsstecker 6 über den Steckanschluss 14, sodass eine nur in Fig. 6 erkennbare Verbindungssteckeröffnung 32 des Verbindungssteckers 6 mit der Außenkontur des Steckanschlusses 14 fluchtet. Anschließend wird der Verbindungsstecker 6 mittels des Manipulators 18 über den Steckanschluss 12 gestülpt und mit einer hier nicht im Detail gezeigten später noch im Detail beschriebenen Steckerverriegelung lösbar verbunden, wie in Fig. 4 erkennbar. Dabei wird über den Steckanschluss 14 auch eine elektrische Verbindung zwischen einer mit dem Steckanschluss 14 verbundenen elektrischen Leistungsversorgung des Containerstapelplatzes und dem Verbindungsstecker 6 des Krans 1 und somit mit dessen elektrischen Versorgungsnetz hergestellt. Ebenso kann eine Datenverbindung, z.B. eine elektrische oder optische Datenübertragung, damit hergestellt werden, z.B. durch Vorsehen von lösbaren Steckverbindungen.

Durch die doppelte Parallelogrammführung des Manipulators 18 kann dabei vorteilhaft sichergestellt werden, dass die Greifvorrichtung 27 bei Ihrer Bewegung bezüglich des Steckanschlusses 14 ihren Neigungswinkel nicht verändert. Somit wird der von der Greifvorrichtung 27 bewegte Verbindungsstecker 6 nicht aus der in den Zeichnungen gezeigten idealen Lage gekippt, so dass das Leitungskabel 5 nicht sehr stark gekrümmt oder gar abgeknickt wird. Anstelle einer Parallelogrammführung kann der Manipulator 18 aber auch anders ausgestaltet sein, um dies sicherzustellen, beispielsweise durch Verwendung eines Roboters mit mindestens einem Roboterarm und einer daran angeordneten Greifvorrichtung oder auf andere, dem Fachmann geläufige Art und Weise. Beispielsweise können auch zwei lineare Teleskoparme oder Ausschübe, ein horizontaler und ein vertikaler, verwendet werden.

Dann wird, wie in Fig. 5 gezeigt, die Greifarretierung der Greifvorrichtung 27 gelöst und der Manipulator 18 durch Drehung der Manipulatorarmantriebe 22, 26 vom Leitungskabel 5 und dem Verbindungsstecker 6 nach in Fig. 5 rechts vom Kran 1 wegbewegt. Anschließend wird mit der Signalleuchte 31 für das Bedienpersonal des Krans 1 angezeigt, dass die Verbindung zwischen Verbindungsstecker 6 und Steckanschluss 14 aufgebaut und der Manipulator 18 frei ist, der Kran 1 also von Verbindungsvorrichtung 13 wegfahren und seinen normalen Betrieb aufnehmen kann. Im vorliegenden Ausführungsbeispiel ist die Verbindungsvorrichtung 13 an der Einfahrt einer Fahrgasse für den Kran 1 angeordnet, so dass die Fahrt entlang des Containerstapelplatzes in den Fig. 2 bis 6 nach schräg rechts oben verläuft. Die Verbindungsvorrichtung 13 kann aber auch an anderer Stelle angeordnet werden.

Wie aus dem Stand der Technik bekannt, ist für eine möglichst lange Lebensdauer des Leitungskabels 5 wichtig, dass es möglichst selten, am besten gar nicht über den zulässigen minimalen Biegeradius hinaus gekrümmt oder gar vollständig abgeknickt wird.

Ein Aspekt der vorliegenden Erfindung hat es deshalb zur Aufgabe, eine verbesserte Führung des an einer Einspeiseeinrichtung angeschlossenen Leitungskabels 5 zu ermöglichen und insbesondere die Gefahr eines Abknickens oder einer zu starken Abkrümmung des Leitungskabels 5 beim Verfahren des elektrischen Verbrauchers, insbesondere Krans 1, zu verringern.

Hierzu sieht die Erfindung, wie besonders gut in Fig. 6 und 7 erkennbar, vor, dass die Steckanschlüsse 14, 14' um eine quer zur Fahrrichtung F und bevorzugt parallel zum Boden verlaufende Drehachse D bzw. D' drehbar angeordnet sind. Fährt dann der Kran 1 mit dem Leitungskabel 5 von der Verbindungsstellung aus Fig. 2 in Fahrrichtung F nach rechts weg, wie in Fig. 6 angedeutet, wird das Leitungskabel 5 aufgrund des in Fahrrichtung F schwenkbaren Steckanschlusses 14 nicht oder kaum gekrümmt oder abgeknickt, sondern verläuft vom Steckanschluss 14 weitgehend gerade und in Zugrichtung des Leitungskabels 5 zur Kabelführungsvorrichtung 7 hin. Entfernt sich der Kran 1 dann weiter von der Einspeiseeinrichtung 12 und Verbindungsvorrichtung 13, wird das Leitungskabel 5 Stück für Stück in bekannter Weise neben der Fahrtrasse des Krans 1 abgelegt. Im Gegensatz zum Stand der Technik wird bei der vorliegenden Ausgestaltung aber der Steckanschluss 14 soweit gekippt, dass sich der Verbindungsstecker 6 leicht nach unten neigt und das Leitungskabel 5 mit kaum oder nur geringer Krümmung vom Verbindungsstecker 6 kommend auf den Boden abgelegt wird.

Somit wird das Leitungskabel 5 während des gesamten Ablagevorgangs nur wenig gekrümmt, wodurch eine schonende Leitungsführung ermöglicht, die Lebensdauer des Leitungskabels 5 verlängert und somit die Zuverlässigkeit der Anlage erhöht wird.

Die Verwendung der in den Zeichnungen gezeigten und oben beschriebenen Drehfunktionalität des Steckanschlusses 14 ist auch bei Anlagen mit dauerhafter Verbindung des Leitungskabels 5 mit der Einspeiseeinrichtung 12 möglich, sodass sich auch dann die Vorteile einer verbesserten Leitungskabelführung ergeben.

Das in Fig. 7 gezeigte Detail der Verbindungsvorrichtung 13 zeigt hier einen zusätzlichen Steckanschluss 14" auf, welcher in der Funktionsweise aber genau den Steckanschlüssen 14, 14' entspricht. Da diese identisch ausgebildet sind, wird die Erfindung nachfolgend bevorzugt anhand des einen Steckanschlusses 14 erläutert. Die beiden weiteren Steckanschlüsse 14', 14" sowie deren Teile werden mit den entsprechenden Bezugszeichen wie beim Steckanschluss 14 bezeichnet, ggf. ergänzt um jeweils einen bzw. zwei Apostrophe.

Der Steckanschluss 14 weist ein Steckanschlussgehäuse 33 auf, in welchem die elektrischen Anschlusselemente für einen elektrischen Leistungsanschluss und/oder einen Datenverbindungsanschluss (nicht sichtbar) angeordnet sind.

Um ein Eindringen von Feuchtigkeit, Staub, Wasser, Regen etc. von oben auf die elektrischen Anschlusselemente zu vermeiden, weist das Steckanschlussgehäuse 33 an seinem in Fig. 2 gezeigten Ruhezustand oberen Ende eine Abdeckung 34 auf, welche über ein Paar von Scharnieren 35 drehbar an dem Steckanschlussgehäuse 33 angelenkt ist. Die Abdeckung 34 wird in an sich bekannter Weise federbewirkt in der geschlossenen Stellung gehalten bzw. aus einer offenen Stellung in die geschlossene Stellung zurückbewegt.

Um die Abdeckung 34 beim Aufsetzen bzw. Aufstecken des Verbindungssteckers 6 automatisch öffnen zu können, sind mit der Abdeckung 34 wirkverbundene Öffnungslaschen 36 auf der Seite der Scharniere 35 vorgesehen, welche nach außen über das Steckanschlussgehäuse 33 ragen. Ein entsprechender Anschlag im Verbindungsstecker 6, insbesondere der entsprechende Rand der Verbindungssteckeröffnung 32, drückt die Öffnungslaschen 36 dann beim Aufsetzen und Überstülpen des Verbindungssteckers 6 auf das Steckanschlussgehäuse 33 nach unten, sodass sich die Abdeckung 34 nach oben bewegt. Hierdurch werden die elektrischen Anschlusselemente des Steckanschlusses 14 freigegeben. Anschließend wird der Verbindungsstecker 6 dann noch weiter nach unten bewegt und die im Verbindungsstecker 6 befindlichen, hier männlichen elektrischen und/oder Daten-Anschlusselemente können mit den entsprechenden, hier weiblichen Anschlusselementen im Steckanschlussgehäuse 33 gegen äußere Einflüsse wie Wind, Wasser, Regen, etc. geschützt verbunden werden. Auch wird durch die Abdeckung 34 verhindert, dass Bedienpersonal oder Unbefugte direkt und ungeschützt Zugang zu den Anschlusselementen, insbesondere zu den elektrischen Anschlusselementen erhalten.

Um die Schwenkplatte 15 und somit den Steckanschluss 14 in der in Fig. 2 bis 5 gezeigten Ruhestellung zu halten, kann ein in Fig. 7 gezeigter Anschlag 37 an dem Lager 16 für die Schwenkplatte 15 vorgesehen werden. Bei der gezeigten Ausführung bleibt der Steckanschluss 14 dann gewichtsabhängig in der Ruhestellung. In einer vorteilhaften, nicht gezeigten Ausführung kann auch eine Federkraft auf die Schwenkplatte 15 wirken, um den Steckanschluss 14 in seine Ruhestellung zurückzuführen, wenn er nicht mit dem Verbindungsstecker 6 verbunden ist.

Bei einer alternativen Ausgestaltung der Verbindungsvorrichtung 13, welche bevorzugt auch längs einer Fahrtrasse des Krans 1 angeordnet sein kann, sind die Steckanschlüsse 14, 14' vorteilhaft so ausgebildet, dass sie sich um eine bevorzugt mittig angeordneten Drehachse D in beide Richtungen der Fahrrichtung F drehen können, also eine Ablage des Leitungskabels 5 sowohl auf der eine Seite als auch auf der andere Seite der Steckanschlüsse 14, 14' erfolgen kann. Auch hier ist vorteilhaft eine Haltevorrichtung vorgesehen, welche sicherstellt, dass der nicht verbundene Steckanschluss in die zum Anschließen des Verbindungssteckers 6 geeignete, vorteilhafterweise nach oben weisende Richtung steht. Bevorzugt kann der Steckanschluss 14 dabei solange an der Bodenplatte 17 arretiert werden, bis der Verbindungsstecker 6 sicher mit dem Steckanschluss 14 verbunden ist. Eine solche Ausgestaltung wird später beschrieben und ist für den Fachmann selbstständig realisierbar.

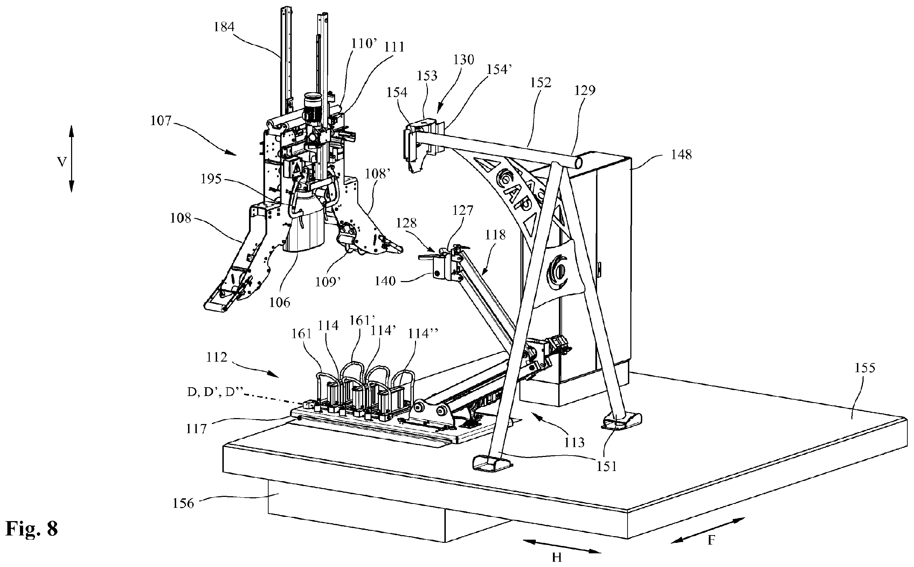

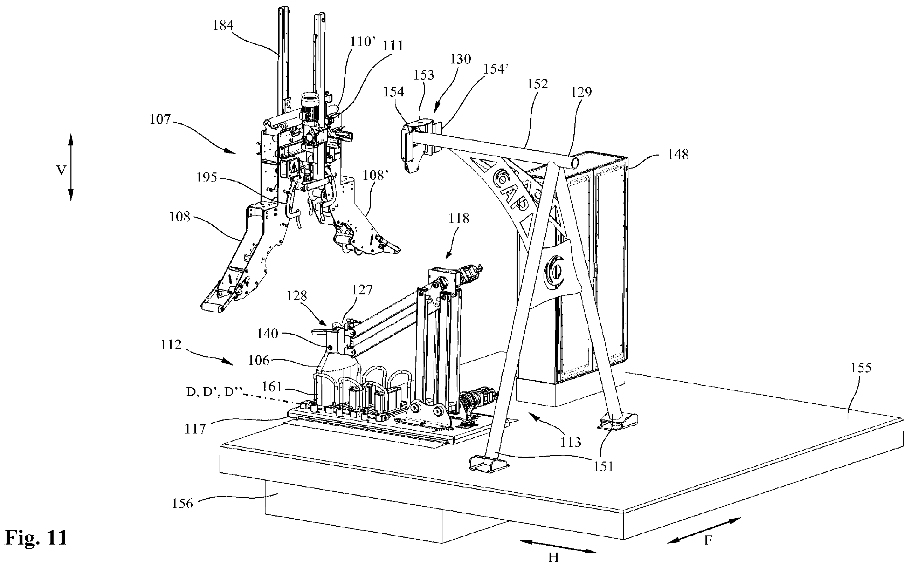

Die Fig. 8 bis 28 zeigen alternative Ausgestaltungen von Teilen des in Fig. 1 grundsätzlich gezeigten Energieübertragungssystems, insbesondere mit abgewandelter Einspeiseeinrichtung 112, Verbindungsvorrichtung 113 sowie Kabelführungsvorrichtung 107. Da diese in weiten Teilen gleich oder ähnlich aufgebaut sind wie bei der in Fig. 2 bis 7 gezeigten Ausführung, werden einander entsprechende Teile mit entsprechenden Bezugsziffern, jeweils ergänzt um die Ziffer "100" verwendet. Auch wird vor allem auf die Unterschiede eingegangen, so das Ausführungen zu entsprechenden Teilen bei der ersten Ausführung nach Fig. 2 bis 7 entsprechend auch für die alternativen Ausgestaltungen der Fig. 8 bis 28 gelten und umgekehrt, soweit nicht anders angegeben.

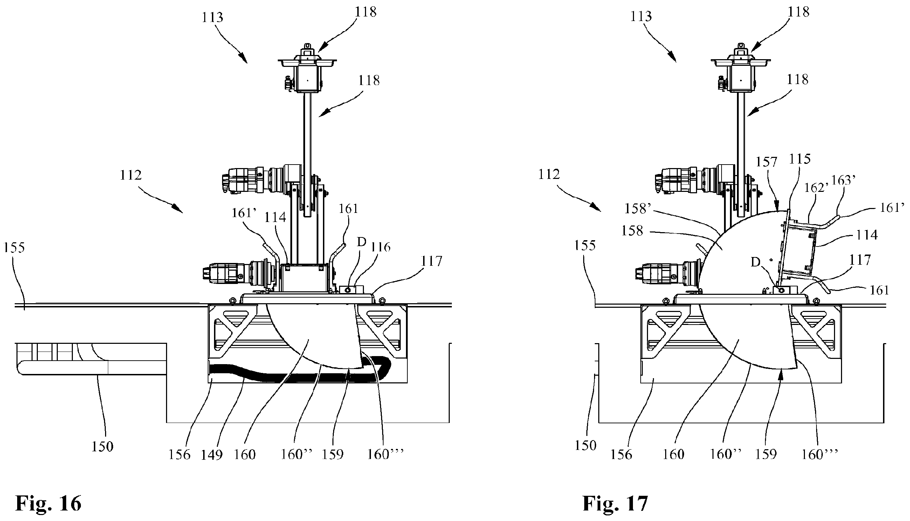

Bei der in Fig. 8 gezeigten Einspeiseeinrichtung 112 ist auch ein Schaltschrank 148 gezeigt, in dem die elektrische Spannungsversorgungseinheit sitzt und zu der in Fig. 16 angedeutete Versorgungs- und Datenkabel 149 führen, welche durch Kabeldurchführungen 150, 150', 150" (siehe Fig. 16 bis 18) in den Schaltschrank 148 führen.

Die in Fig. 8 bis 13 gezeigte Funktionsweise des Energieübertragungssystems entspricht grundsätzlich dem in Fig. 2 bis 7 gezeigten. So wird in Fig. 8 das Leitungskabel 5 mit einem Verbindungsstecker 106 wieder so gegenüber dem Manipulator 118 positioniert, dass eine Greifvorrichtung 127 den Verbindungsstecker 106 bei Bewegung in der horizontalen Zustellrichtung H greifen kann. Anschließend wird der Verbindungsstecker 106 etwas abgelassen, so dass ihn der Manipulator 118 in oben beschriebene Weise mit der Greifvorrichtung 127 greifen und in die zum Aufsetzen auf den Steckanschluss 114 vorgesehene Position bringen zu können. Der Steckanschluss 114 ist wie der Steckanschluss 14 ausgebildet und weist insbesondere ein Steckanschlussgehäuse mit beweglicher Abdeckung auf.

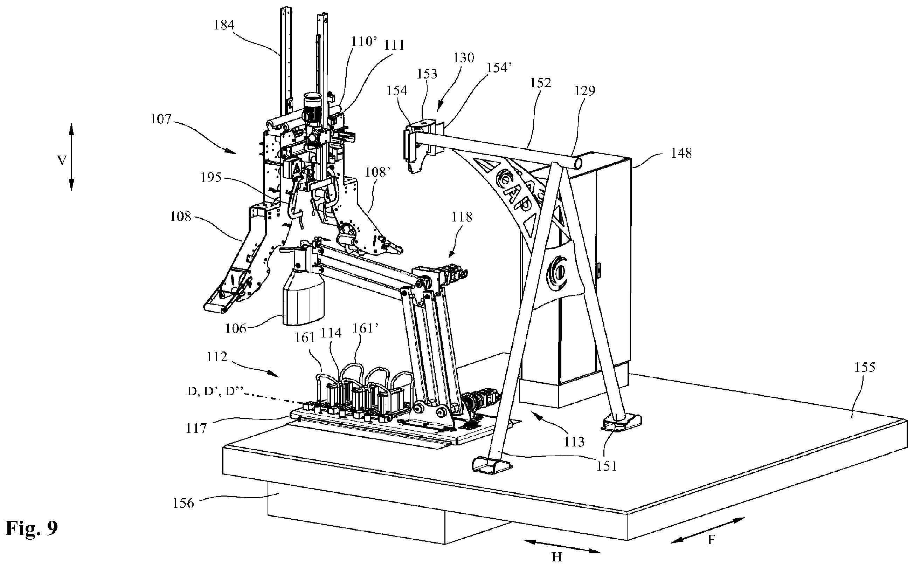

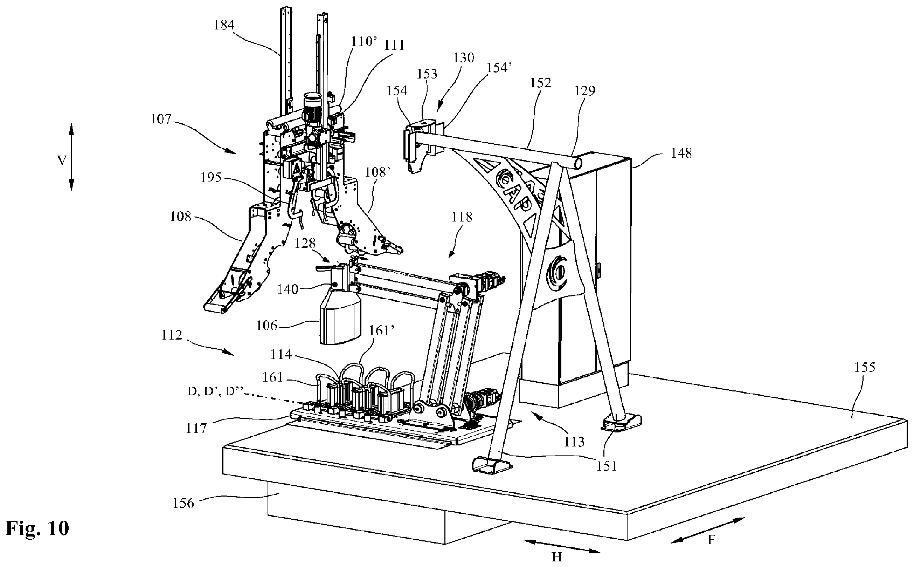

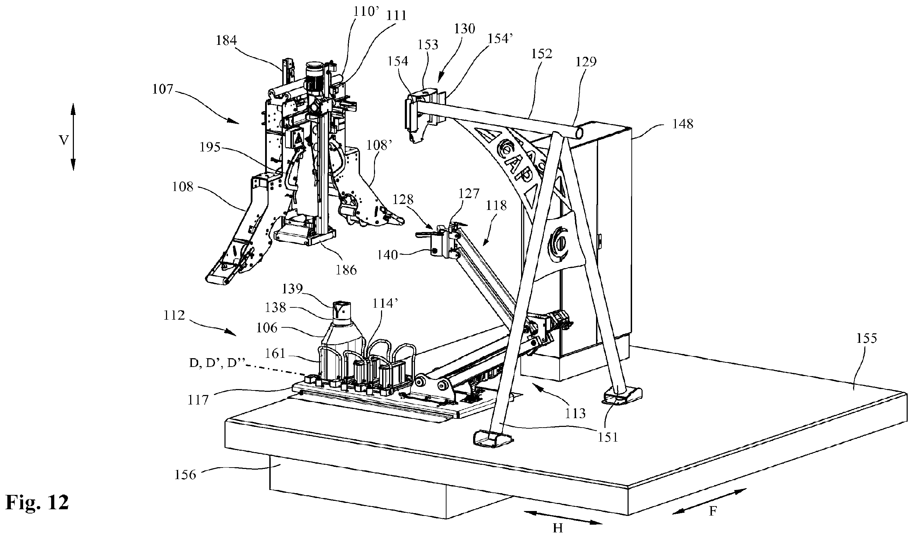

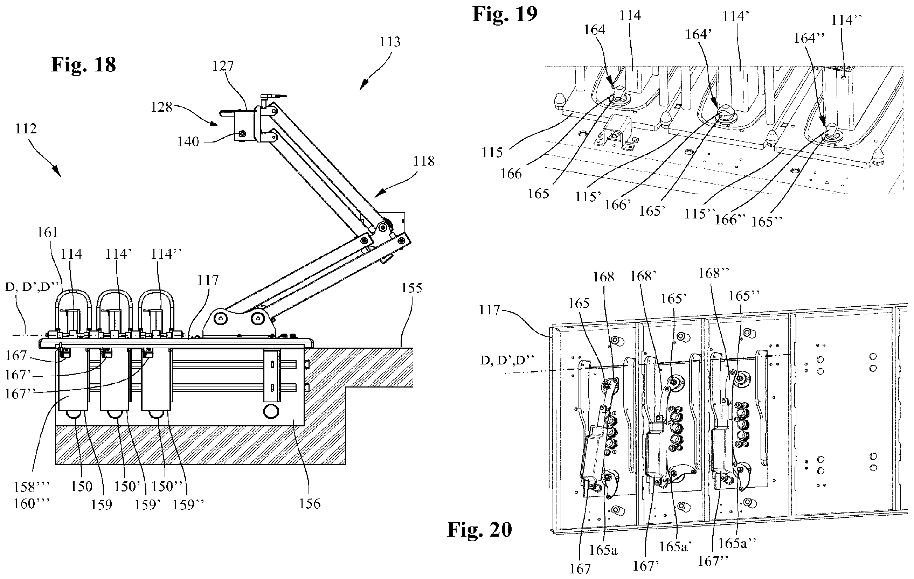

Von der Stellung in Fig. 9 wird der Verbindungsstecker 106 dann wieder zu einem Steckanschluss 114 geführt, auf den er in oben beschriebene Weise aufgesetzt wird, wie in Fig. 10 bis 11 gezeigt. Dabei wird der Verbindungsstecker 106 wieder an der Einspeiseeinrichtung 112 arretiert, was nachfolgend anhand von Fig. 19 und 20 detailliert erläutert wird. Anschließend kann wie in Fig. 12 gezeigt der Manipulator 118 vom Verbindungsstecker 106 gelöst und in seine Ruheposition gefahren werden.

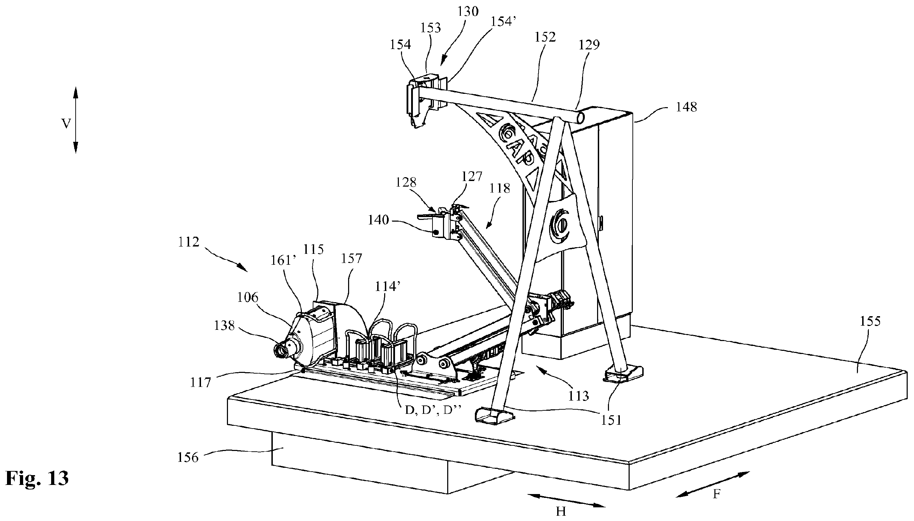

In Fig. 13 ist gezeigt, dass durch das Verfahren des nicht gezeichneten Krans 1 der Verbindungsstecker 106 mit Steckanschluss 114 wieder um die Drehachse D aus der in Fig. 12 gezeigten Ruhestellung geschwenkt wird.

Der in Fig. 8 bis 13 gezeigte alternative Signalmast 129 weißt dabei zwei schräge Standfüße 151 auf, an denen am vorderen, freien Ende eines Gabelbaums 152 eine alternative Identifikatorplatte 130 trägt. Entsprechend ist an der Kabelführungsvorrichtung 107 ein alternativ ausgebildeter Sensor 111 angeordnet, welcher zur Detektion der Identifikatorplatte 130 verwendet wird. Dabei kann vorteilhaft ein Abstandssensor 111 mit einem schmalen Messbereich verwendet werden. Die Identifikatorplatte 130 hat vorteilhaft einen in horizontaler Zustellrichtung H vorderen Zentralbereich 153 und sich daran in Fahrrichtung F beidseitig anschließende, gegenüber dem Zentralbereich 153 in horizontaler Zustellrichtung H nach hinten, also vom Kran 1 weg, versetzte Randbereiche 154, 154'. Bevorzugt weist die Identifikatorplatte 130 einen Reflektor, z.B. eine Reflektorfolie aus, um das vom Abstandsensor 111 ausgesendete Signal möglichst gut zu reflektieren. Ggf. kann aber auch wieder die Identifikatorplatte 31 aus dem weiter oben beschriebenen Ausführungsbeispiel verwendet werden.

Um den Verbindungsstecker 106 mittig zu dem Zentralbereich 153 zu positionieren, detektiert der Abstandssensor 111 beim Anfahren in Fahrrichtung F von in Fig. 8 rechts oder links zunächst den Abstand zu einem der beiden hinteren Randbereiche 154, 154'. Wenn er dann weiter in Fahrrichtung F zum Zentralbereich 153 hin fährt, detektiert er beim räumlichen Erfassen des Zentralbereichs 153 eine plötzliche Abstandsverringerung und somit den Beginn des vorderen Zentralbereichs 153. Über die bekannten geometrischen Abmessungen, insbesondere die Ausdehnung des Zentralbereichs 153 in Fahrrichtung F, kann dann der noch notwendige Verfahrweg in Fahrrichtung F bestimmt werden, um den Verbindungsstecker 106 möglichst exakt auf die Greifvorrichtung 127 zu positionieren.

Auf diese Weise kann die Positionierung des Verbindungssteckers 106 gegenüber dem Manipulator 118 vereinfacht werden, wobei lediglich an der Kabelführungsvorrichtung 107 ein aktiver Sensor 111 angeordnet werden kann, während es sich bei der Identifikatorplatte 130 um ein passives Element handeln kann. Die Identifikatorplatte 130 kann dabei auch andere Ausgestaltungen aufweisen, welche eine klar definierte Änderung des Abstands durch den Sensor 111 detektieren lässt. Z.B. kann der Zentralbereich nach hinten versetzt sein und die Randbereiche näher beim Kran 1. Insbesondere können in einer vereinfachten Ausführung die Randbereiche 154, 154' weggelassen werden, so dass nur der Übergang von der gar nicht oder nur schlecht reflektierenden Umgebung zum gut reflektierenden Bereich der der Identifikatorplatte bestimmt werden muss. Auch können ggf. der Zentralbereich 153 und die sich daran anschließende Randbereiche 154, 154', seien sie zueinander in horizontaler Zustellrichtung H versetzt oder nicht, unterschiedlich gut reflektierende Eigenschaften aufweisen, so dass durch das Maß der zurückgeworfenen Signalstärke eine Unterscheidung ermöglicht wird.

Weiter unterscheidet sich die Ausgestaltung nach Fig. 8 bis 28 durch die Gestaltung der schwenkbaren Steckanschlüsse 114 von der Ausführung in Fig. 2 bis 7. Es wird deshalb nachfolgend wiederum vor allem auf die Unterschiede eingegangen, während für gleiche oder ähnliche Bauteile wiederum die oben zu Fig. 1 gemachten Ausführungen entsprechend gelten. Auch hier wird aufgrund der identischen Ausbildung der Steckanschlüsse 114, 114', 114" die Erfindung weiter anhand des Steckanschlusses 114 beschrieben, sofern nichts anderes angegeben. Entsprechend gelten diese Ausführung auch für die anderen Steckanschlüsse 114', 114".

Wie aus Fig. 16 bis 18 hervorgeht, ist der Steckanschluss 114 wieder mit einer Schwenkplatte 115 um eine Drehachse D an einer Befestigungsplatte 117 um ein Lager 116 drehbar angebracht. Der Steckanschluss 114 könnte aber auch direkt drehbar an der Befestigungsplatte 117 angeordnet sein. Die Drehachse D verläuft dabei im wesentlichen horizontal und in Richtung der horizontalen Zustellrichtung H des Manipulators 118. Die Befestigungsplatte 117 ist über einer im Fundament 155 vorgesehenen Grube 156 angeordnet. Wie in Fig. 16 und 18 erkennbar, münden in der Grube 156 die vom Schaltschrank 148 kommenden Kabeldurchführungen 150, in denen die in Fig. 16 angedeuteten Energieversorgungs- und Datenkabel 149 verlaufen. Diese Kabel 149 reichen jeweils durch eine unterhalb des Steckanschlusses 114 angeordnete Verbindungsöffnung in der Bodenplatte 117 zur Unterseite des Steckanschlusse 114, wo sie mit den hier weiblichen Anschlusselementen des Steckanschlusses 114 elektrisch verbunden sind, wie in Fig. 20 angedeutet.

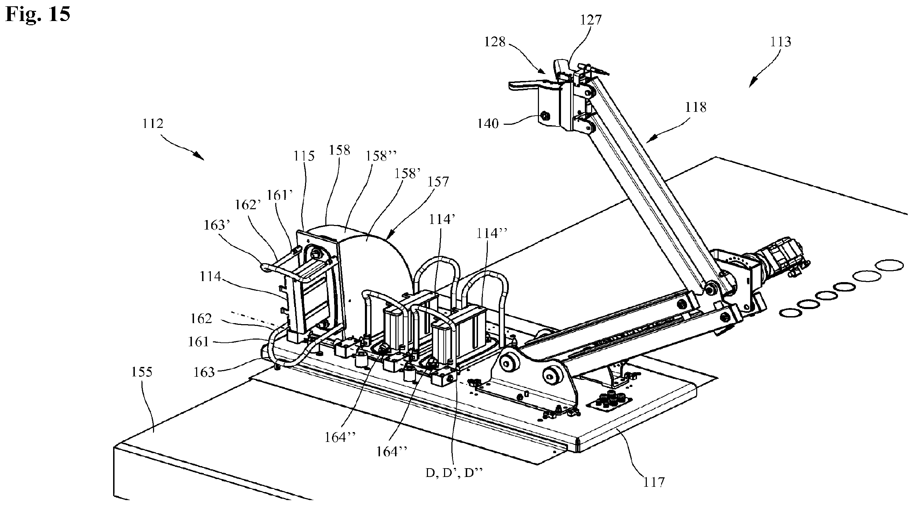

Um beim Verschwenken des Steckanschlusses 114 die an seiner Unterseite angeordneten Kabel 149 sauber zu führen und gegenüber der Umgebung abkapseln zu können, u.a. auch aus Berührungsschutzgründen, ist an der Unterseite des Steckanschlusses 114, insbesondere der Schwenkplatte 115, eine mit der Schwenkplatte 115 um die Drehachse D bewegliche erste Schutzumhausung 157 vorgesehen. An der Unterseite der Schwenkplatte 115 schließen sich identisch ausgebildete, ca. 100° messende kreissektorförmige Seitenwandungen 158, 158' sowie eine die Kreisbogenseiten der Seitenwandungen 158, 158' verbindende Stirnwandung 158" der ersten Schutzumhausung 157 an, wie in Fig. 15 und 17 gut erkennbar. Eine weitere Stirnseite zwischen den Seitenwandungen 158, 158', der Stirnwandung 158" und der Schwenkplatte 115 bleibt frei und bildet eine in Fig. 18 von vorne sichtbare Öffnung 158''' für die von der Kabeldurchführung 150 kommenden Kabel 149.

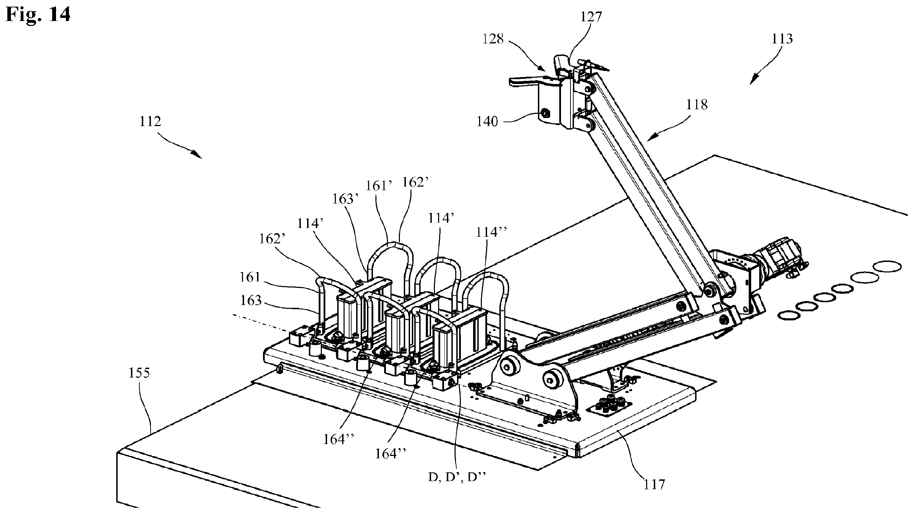

Die ersten Schutzumhausung 157 läuft in einer zweiten, fest an der Unterseite der Bodenplatte 117 angeordneten, etwas größer, aber entsprechend ausgebildeten zweiten Schutzumhausung 159 mit kreissektorförmigen Seitenwandungen 160, 160', eine diese verbindende Stirnwandung 160" sowie eine stirnseitige Öffnung 160''' für die von der Kabeldurchführung 150 kommenden Kabel 149. Alternativ kann aber auch auf die zweite Schutzumhausung 159 verzichtet werden, da die erste Schutzumhausung 157 bei abgesenkter Schwenkplatte 115 gemäß Fig. 14 und 16 ebenfalls einen Schutz für die Kabel 149 bietet.

Die Kabel 149 sind dabei so lang bemessen, dass die in Fig. 15 und 17 gezeigte vollständig umgeklappte Stellung des Steckanschlusses 114 möglich ist. In der in Fig. 14 und 16 gezeigten vollständig eingeschwenkten Stellung des Steckanschlusses 114 faltet oder legt sich die überschüssige Kabellänge des Kabels 149 bevorzugt innerhalb der Schutzumhausungen 157, 159 zusammen. Da die Kabel 149 im Bereich der Schutzumhausungen 157, 159 vollständig von diesen umgeben sind, können die Kabel 149 beim Verschwenken des Steckanschlusses 114 zuverlässig geführt werden, so dass weder eine Beschädigung der Kabel 149 noch eine Behinderung der Bewegung des Steckanschlusses 114 zu befürchten ist. Bevorzugt kann zur Führung der Kabel 149 eine nicht gezeichnete Energiekette verwendet werden, welche auf dem Boden der Grube 156 verläuft und dann in Fig. 17 S-förmig nach oben verläuft

Um eine nicht ganz exakte Positionierung des Verbindungssteckers 106 gegenüber dem Steckanschluss 114 noch ausgleichen zu können, ist an den schmalen Stirnseiten der Schwenkplatte 115 je ein Zentrierbügel 161, 161' angeordnet. Diese weisen dabei einen unteren, vertikalen Führungsbereich 162, 162' auf, an die sich ein oberer, vom Steckanschluss 114 weg weisender, schräger Einführungsbereich 163, 163' anschließt. Bei eingestecktem Steckanschluss 114, wie beispielsweise in Fig. 13 gezeigt, umgreifen die vertikalen Führungsbereiche 162, 162' den Verbindungsstecker 106, wodurch eine verbesserte Positionierung, insbesondere Vorzentrierung des Verbindungssteckers 106 auf dem Steckanschluss 114 erreicht werden kann.

Um ein versehentliches Lösen des Verbindungssteckers 106 vom Steckanschluss 114 zu verhindern, was insbesondere während der Energieübertragung ungünstig ist, sind an den Schwenkplatten 115, 115', 115" an den Stirnseiten der Steckanschlüsse 114, 114', 114" jeweils Steckerverriegelungen 164, 164', 164" vorgesehen, welche insbesondere in Fig. 19 und 20 gut erkennbar sind. Aufgrund der identischen Ausbildung der Steckerverriegelungen 164, 164', 164" wird nachfolgend wieder nur die Steckerverriegelung 164 beschrieben, soweit nicht anders angegeben.

Die Steckerverriegelung 164 weist dabei jeweils einen durch die Schwenkplatte 115 im Bereich des Verbindungssteckers 106 reichenden Verriegelungsbolzen 165 auf, der nach oben über die Schwenkplatte 115 ragt und einen länglichen Verriegelungskopf 166 aufweist. Vorteilhaft kann auf der gegenüberliegenden Stirnseite des Steckanschlusses 114 ein weiterer, identisch ausgebildeter Verriegelungsbolzen 165a angeordnet sein, wie in Fig. 20 angedeutet.

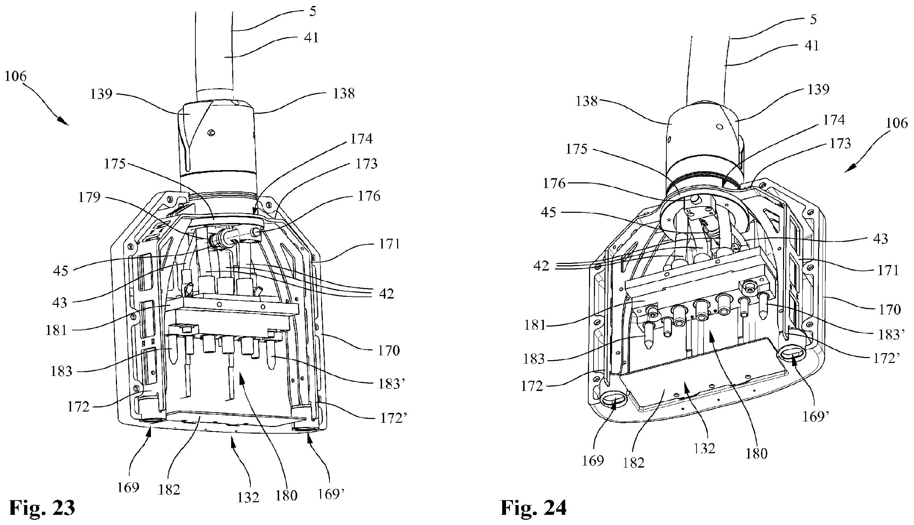

In der geöffneten Stellung ist der Verriegelungskopf 166 so ausgerichtet, dass er in eine entsprechende, insbesondere in Fig. 24 gut erkennbare längliche Verriegelungsöffnung 169 am Verbindungsstecker 106 durchgesteckt werden kann.

Wenn der Verbindungsstecker 106 dann ganz auf den Steckanschluss 114 aufgesetzt ist, können der Verriegelungskopf 166 sowie der nicht gezeichnete Verriegelungskopf des Verriegelungsbolzens 165a mittels eines in Fig. 20 gezeigten Verriegelungsantriebs 167 über eine Hebelanordnung 168 gleichzeitig von einer geöffneten Stellung, wie in Fig. 19 und 20 anhand der äußeren beiden Steckanschlüssen 114, 114" gezeigt, in eine in Fig. 19 und 20 beim mittleren Steckanschluss 114' gezeigte, um vorteilhaft 90° verdrehte geschlossene Stellung bewegt noch. Ggf. kann aber auch eine geringere oder größere Drehung ausgewählt werden, um sicher zu verriegeln. Bevorzugt kann der Verriegelungsantrieb 167 über eine Hebelanordnung 168 gleichzeitig den Verriegelungsbolzen 165 sowie den gegenüberliegenden Verriegelungsbolzen 165a antreiben.

Anstelle einer Hebelanordnung 168 kann aber auch für jeden Verriegelungsbolzen 165, 165' 165" bzw. 165a, 165a' 165a" ein eigener Verriegelungsantrieb vorgesehen werden. Grundsätzlich könnte auch an jedem Steckanschluss 114, 114', 114" nur eine Steckerverriegelung vorgesehen werden.

Zusätzlich dient die Steckerverriegelung 164 vorliegend dazu, die Schwenkplatte 115 an der Bodenplatte 117 zu fixieren, wenn kein Verbindungsstecker 114 angeschlossen ist. Hierzu greift der in Fig. 20 untere Hebelarm, welcher den unteren, in Fig. 19 hinteren Verriegelungsbolzen 165a antreibt, in der in Fig. 19 und 20 gezeigten Fixierstellung unter die Bodenplatte 117, so dass die Schwenkplatte 115 nicht mit um die angedeutete, oberhalb der Bodenplatte 117 verlaufende Drehachse D von der Bodenplatte 117 weg verschwenkt werden kann. Im Gegensatz dazu ist die Fixierung der mittleren Schwenkplatte 115' geöffnet, so dass diese gekippt werden könnte. Alternativ oder zusätzlich kann auch eine von der Steckerverriegelung 164 unabhängige Halterung, insbesondere Steckanschlussverriegelung zur lösbaren Befestigung des Steckanschlusses 114 in der Ruhestellung an der Bodenplatte 117 vorgesehen werden, bis der Verbindungsstecker 114 und Steckanschluss 114 sicher miteinander verbunden sind.

Ein weiterer Aspekt der Erfindung sieht vor, dass das Leitungskabel 5 zum besseren automatischen Verbinden einen speziellen Aufbau aufweist. Weiter kann vorteilhaft auch der Verbindungsstecker 6, 106 speziell ausgebildet sein, um das Greifen mit dem Manipulator 18, 118 und insbesondere der Greifvorrichtung 27, 127 zu verbessern, und zwar bei beiden oben beschriebenen Ausführungsbeispielen.

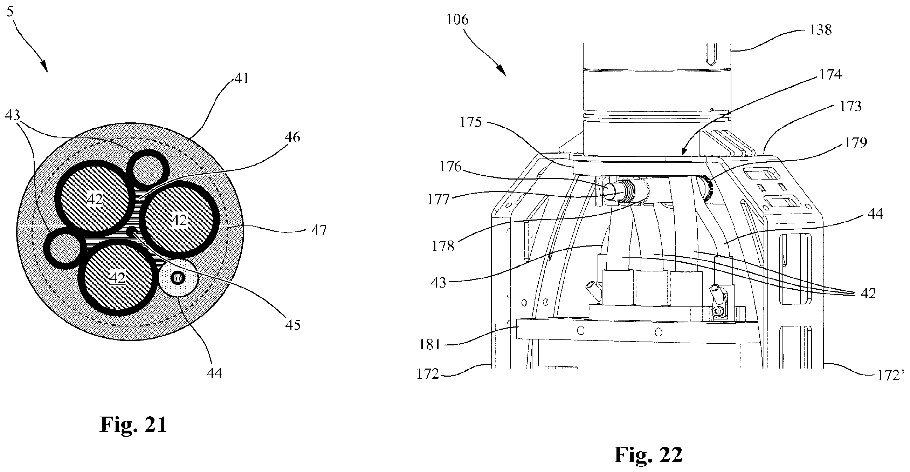

Dies wird nachfolgend vor allem anhand von Fig. 21 bis 24 ausführlich beschrieben.

Fig. 21 zeigt einen Querschnitt durch ein Leitungskabel 5, beispielsweise etwas oberhalb des Verbindungssteckers 106. Dabei weist das Leitungskabel 5 einen aus einem flexiblen Material hergestellten Außenmantel 41 auf, beispielsweise aus Gummi, PVC oder einen anderen elastischen Kunststoff. Der Außenmantel 41 umgibt drei hier symmetrisch angeordnete Phasenleiter 42 für die elektrische Energieübertragung, einen in zwei Einzelleiter 43 aufgeteilten Schutzleiter sowie einen Datenübertragungsleiter 44, insbesondere ein optisches Datenübertragungskabel. Weiter ist im Kern des Leitungskabels 5 ein flexibles, aber dennoch robustes Tragorgan 45 vorgesehen, beispielsweise einen Aramidseil oder Drahtseil. Das Tragorgan 45 ist umgeben von einem Füllmaterial und/oder Formteilen 46, welche eine Stütz- und Haltefunktion für die weiteren Leiter 42 bis 44 des Leitungskabels 5 ausüben.

Hierdurch können die im Leitungskabel 5 angeordneten empfindlichen Leiter 42 bis 44 von Zug entlasten werden, während das Tragorgan 45 maßgeblich zur Aufnahme der Längskräfte beim Auf- und Abrollen des Leitungskabels 5 dient. Zusätzlich kann im Außenmantel 41 eine weitere Zugentlastung 46 vorgesehen werden, beispielsweise ein in den Außenmantel 41 eingebettetes Geflecht oder Gewebe.

Damit das Tragorgan 45 als Zugentlastung dienen kann, wird es in dem in Fig. 22 bis 24 im Detail gezeigten, teilweise auseinander gebauten Verbindungsstecker 106 wie nachfolgend beschrieben befestigt.

Der Verbindungsstecker 106 weist zwei Steckerverkleidungshälften auf, von denen in Fig. 22 und 23 jeweils nur die eine Steckerverkleidungshälfte 170 gezeigt ist, während die andere entfernt ist, um das Innenleben des Verbindungssteckers 106 zeigen zu können.

Weiter ist ein aus einem robusten Material, insbesondere einem Stahlblech hergestellter, im wesentlichen U-förmiger Stützrahmen 171 vorgesehen, welcher an seinen freien Schenkelenden 172, 172' jeweils die oben bereits genannten, als Langloch ausgebildeten Verriegelungsöffnungen 169, 169' aufweist. Das die freien Schenkelenden 172, 172' verbindende Mittelteil 173 des Stützrahmens 171 weist dann eine kreisförmige Öffnung 174 auf, durch welche das im wesentlichen hohlzylindrisch ausgebildete Greifteil 138 des Verbindungssteckers 106 von in Fig. 22 und 23 unten durchgesteckt ist. Das Greifteil 138 schlägt mit einem kreisringförmigen Außenflansch 175 am Stützrahmen 171 an und wird dort befestigt, beispielsweise verschraubt oder vernietet.

Um Belastungen in Längsrichtung des Leitungskabels 5 aufnehmen zu können, kann zum einen die Zugentlastung 47 des Außenmantels 41 im Greifteil 138 und/oder am Stützrahmen 171 festgeklemmt sein(nicht sichtbar). Zum anderen ist am kreisringförmigen Außenflansch 175 des Greifteils 138 ein quer zur Längsrichtung des Leitungskabels 5 verlaufender Spannbolzen 176 vorgesehen. Der Spannbolzen 176 weist eine nicht gezeichnete Befestigung für das Tragorgan 45 auf, insbesondere eine Durchgangsöffnung, durch welche das Tragorgan 45 durchgesteckt wird. Auf dem Spannbolzen 176 ist ein Federelement, insbesondere eine Spiralfeder 177 angeordnet, welche mit einer umgebenden Spannbolzenhülse 178 verbunden ist, an der das eine Ende des Tragorgans 45 befestigt ist. Zum Spannen des Tragorgans 45 wird der Spannbolzen 176 zunächst in seiner Achsrichtung gegen den Druck einer auf einem abgestuften Ende 178 des Spannbolzens 176 sitzenden Spiralfeder 177 aus einer in Fig. 22 gezeigten Rutschsicherung 179 herausgedrückt. Anschließend wir der Spannbolzen 176 mehrfach in Aufwickelrichtung gedreht, sodass das Tragorgan 45 mit mehreren Wicklungen auf dem Spannbolzen 176 aufwickelt wird. Um zu verhindern, dass sich das Tragorgan 45 unter Belastung wieder abwickelt, drückt die Spiralfeder 177 anschließend den Spannbolzen 176 wieder in die in Fig. 22 gut erkennbare, Rutschsicherung 179. Anstelle der Spiralfeder 177 können auch andere Federelemente verwendet werden, z.B. Tellerfedern, welche den Spannbolzen nach dem Spannen des Tragorgans 45 wieder zuverlässig in die Rutschsicherung 179 drücken. Die Rutschsicherung 179 kann dabei vorteilhaft eine gerändelte Innenbohrung aufweisen, mit dem ein ebenfalls gerändeltes Ende des Spannbolzens 176 zusammenwirkt. Die unterschiedlichen Leiter 42 bis 44 hingegen werden unbelastet durch die kreisförmige Öffnung 174 im Stützrahmen 171 in den Bereich zwischen den freien Schenkelenden 172, 172 des Stützrahmens 171 geführt und dort mit jeweiligen, hier männlichen elektrischen Anschlusselementen 180 des Verbindungssteckers 106 elektrisch und mechanisch verbunden. Die einzelnen männlichen Anschlusselemente 180 sind an einem Anschlussträger 181 angeordnet, welcher in die von der Verbindungssteckeröffnung 132 zum Greifteil 138 verlaufende Längsrichtung, also auch in Längsrichtung des Leitungskabels 5, ortsfest gehalten und quer zu dieser Längsrichtung frei schwimmend gelagert ist.

Um die männlichen Anschlusselemente 180 gegen unerlaubtes Berühren und andere äußere Einflüsse zu schützen, wird die Verbindungssteckeröffnung 132 durch eine Schutzklappe 182 verschlossen. Die Schutzklappe 182 wird dabei federbewirkt in der in Fig. 21 und 22 gezeigte Schließstellung gehalten, kann aber beim Aufsetzen des Verbindungssteckers 106 auf den Steckanschluss 114 durch die Kraft des Manipulators 118 in den Bereich zwischen den freien Schenkelenden 172, 172' weggeklappt werden.

Um die männlichen Anschlusselemente 180 des Verbindungssteckers 106 in entsprechende weibliche Anschlusselemente (nicht gezeigt) des Steckanschlusses 114 einführen zu können, sind am Anschlussträger 181 längliche Zentrierbolzen 183 mit kegelförmigem Ende vorgesehen, welche in entsprechende Zentrieröffnungen des Steckanschlusses 114 (nicht gezeigt) eingreifen.

In Fig. 23 gut erkennbar ist der Zentriertrichter 139 am Greifteil 138, welcher zusätzlich zu der in Fig. 2 bis 7 gezeigten Ausführung an seinem unteren Ende schlitzförmig in einen Zentrierschlitz verlängert ist. Hierdurch kann über die in der Einführöffnung 128 der Greifvorrichtung 127 vorgesehenen, zeichnerisch in ihrer Position angedeuteten Zentrierdorne 140 der Verbindungsstecker 106 schon beim Greifen mit der Greifvorrichtung 127 möglichst gut auf den Steckanschluss 114 ausgerichtet werden.

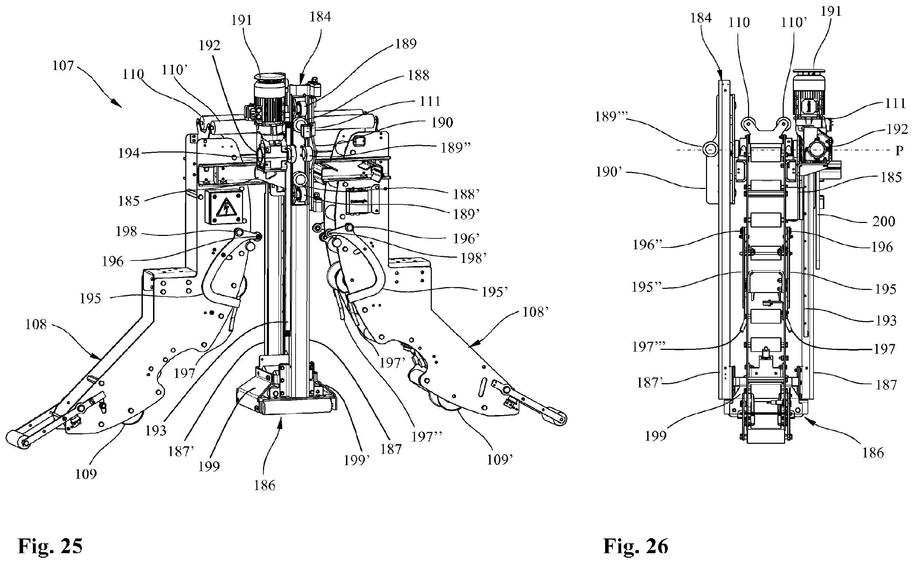

Weiter weist eine in Fig. 25 bis 28 im Detail gezeigte alternative Kabelführungsvorrichtung 107 als Zusatzfunktion zu der in Fig. 2 gezeigten Ausführung eine Pendelschwinge 184 zur besseren Führung des in Fig. 8 bis 20 und 25 bis 28 zeichnerisch nicht dargestellten Leitungskabels 5 auf. Grundsätzlich sind derartige Pendelschwingen bereits bekannt, dem gegenüber neu ist vorliegend aber die Möglichkeit der linearen Bewegbarkeit, insbesondere der linearen Höhenverstellung der Pendelschwinge 184. Dies dient dazu, die während des Verfahrens des Krans 1 ganz in der unteren Stellung befindliche Pendelschwinge 184 zum automatischen Greifen des Verbindungssteckers 106 mittels des Manipulators 118 ganz nach oben und aus dem Greifbereich des Manipulators 118 herauszubewegen und den Verbindungsstecker 106 richtig positionieren zu können.

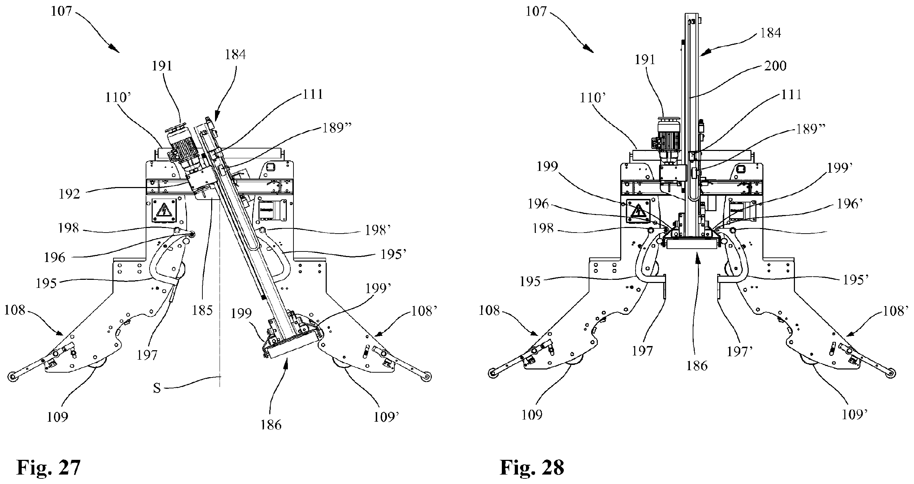

Dabei ist an der Kabelführungsvorrichtung 107 eine um eine im wesentlichen horizontal und quer zur Fahrrichtung F des Krans 1 ausgerichtete Pendelachse P drehbare Pendelhalterung 185 vorgesehen, damit die Pendelschwinge 184 um die Pendelachse P hin und her pendeln kann, wie in Fig. 27 zu erkennen.

Bewirkt wird die Auslenkung der Pendelschwinge 184 aus der Senkrechten S in an sich bekannter Weise durch das während des Verfahrens des Krans 1 auf- bzw. abgewickelte Leitungskabel 5, welches durch eine am unteren Ende der Pendelschwinge 184 angeordnete Kabelführung 186 mit längs und quer ausgerichteten Kabelführungsrollen läuft. Dabei kann über an sich bekannte, nicht näher bezeichnete Stramm- bzw. Schlappsensoren detektiert werden, ob das Leitungskabel 5 gerade stramm oder schlapp geführt ist, und dann ggf. das Leitungskabel 5 eingezogen oder ausgegeben werden. Bevorzugt wird das Leitungskabel 5 durch eine in Ausgaberichtung des Leitungskabels 5 vor der Kabelführung 186 der Pendelschwinge 184 angeordnete weitere Kabelführung geführt, welche vorteilhaft zwischen und/oder am oberen Ende der beiden Rollenbögen 108, 108' angeordnet ist. Die Kabelführung kann vorteilhaft durch die Seitenführungsrollen 110, 110' gebildet werden, es können aber auch andere Möglichkeiten zur Führung des Leitungskabels 5 vorgesehen werden.

Um die Pendelschwinge 184 zwischen den in Fig. 25 und 28 gezeigten oberen und unteren Extremstellungen hin und her bewegen zu können, weist die Pendelschwinge 184 zwei in Fig. 25 zum Teil aufgebrochen dargestellte, im Querschnitt U-förmige, mit ihren offenen Seiten zueinander weisende Führungsschienen 187, 187' auf. Die Führungsschiene 187 wird mittels an der Pendelhalterung 185 angebrachten seitlichen Führungsrollen 188, 188', inneren stirnseitigen Führungsrollen 189, 189' und einer auf der Außenseite des mittleren Schenkels der Führungsschiene 187 laufenden äußeren stirnseitigen Führungsrolle 189" geführt. Die Führungsschiene 187 wird dabei seitlich von einem abgewinkelten Führungsblech 190 mitgeführt, an dem die äußere stirnseitige Führungsrolle 189" angeordnet ist. Die Führung der Führungsschiene 187' ist entsprechend ausgeführt, wobei in Fig. 26 das auf der der Pendelhalterung 185 gegenüberliegenden Seite der Kabelführungsvorrichtung 107 angeordnete Führungsblech 190' der anderen Führungsschiene 187' mit äußerer stirnseitiger Führungsrolle 189''' gut sichtbar ist.

Weiter ist an der Pendelhalterung 185 ein mit der Pendelschwinge 184 beweglicher Pendelantrieb mit einem Elektromotor 191, einem 90°-Getriebe 192 sowie einem auf einer an der Pendelschwinge 184 angebrachten Zahnstange 193 kämmenden Antriebsritzel 194 vorgesehen. Hierdurch kann die Pendelschwinge 184 in ihrer Längsrichtung zur Pendelhalterung 185 motorisch hin und von dieser weg bewegt werden. Alternativ kann auch ein direkter Linearantrieb oder Zahnriemenantrieb für das Ein- und Ausfahren der Pendelschwinge 184 verwendet werden.

Um den Verbindungsstecker 106 für die Greifvorrichtung 127 sauber in der Kabelführungsvorrichtung 107 positionieren zu können, fährt die Pendelschwinge 184 ganz nach oben, wie in Fig. 8 bis 11 und 28 gezeigt. Gleichzeitig oder danach wird der Verbindungsstecker 106 über das Leitungskabel 5 ganz nach oben zur Kabelführung 186 der Pendelschwinge 184 gezogen.

Um den Verbindungsstecker 106 noch besser zum Greifen durch den Manipulator 118 in der Kabelführungsvorrichtung 107 positionieren zu können, sind an den Rollenbögen 108, 108' einander gegenüberliegende Haltebügel 195, 195' angeordnet. Die Haltebügel 195, 195' sind dabei um im wesentlichen horizontale, quer zur Fahrrichtung F verlaufende Drehachsen 196, 196' drehbar und weisen nach unten verlaufende, stabförmige Haltefortsätze 197, 197', 197", 197''' auf, welche in der in Fig. 8 und 28 gezeigten oberen Stellung an dem Verbindungsstecker 106 anliegen und so ein Verdrehen oder Ausweichen des Verbindungsstecker 106 während des Greifens durch die Greifvorrichtung 127 verhindern.

Standardmäßig werden die Haltebügel 195, 195' federbewirkt in der in Fig. 12, 25 und 27 gezeigten offenen Rückzugsstellung an den Rollenbögen 108, 108' gehalten.

Erst wenn die Pendelschwinge 184 in die in Fig. 8 bis 11 und 28 gezeigte obere Haltestellung verfahren wird, schlagen Anschlagsrollen 198, 198' an den oberen, kürzeren Hebelarmen der Haltebügel 195, 195' an entsprechenden Anschlägen 199, 199' der Kabelführung 186 an, sodass die unteren, längeren, in etwa L-förmig nach innen gebogenen Hebelarme der Haltebügel 195, 195' aufeinander zu und zum Verbindungsstecker 106 hin bewegt werden. Die Haltebügel 195, 195' können auch anders ausgestaltet werden, wesentlich ist lediglich, dass beim Hochfahren der Pendelschwinge 184 oder gegebenenfalls auch des Verbindungssteckers 106 selbst die Haltebügel 195, 195' zur Anlage an den Verbindungsstecker 106 bewegt werden.

Wie in Fig. 27 erkennbar, dienen die Kabelführungsanschläge 199, 199' dabei zusätzlich auch als Betätigungselemente für die nicht näher bezeichneten Strammsensoren, wenn die Pendelschwinge 184 in ihre seitlich ganz ausgelenkte Stellung gezogen wird.

Vorliegend ist der oben beschriebene Sensor 111 vorteilhaft an der Pendelschwinge 184 angeordnet, wobei er über eine Energiekette 200 mit Strom versorgt wird und Datentechnisch mit der Steuerung des Krans verbunden ist. Der Sensor 111 könnte aber auch an einer Stelle der Kabelführungsvorrichtung 107 oder auch am Kran 1 angeordnet sein, und könnte auch kabellos mit der Steuerung verbunden sein.

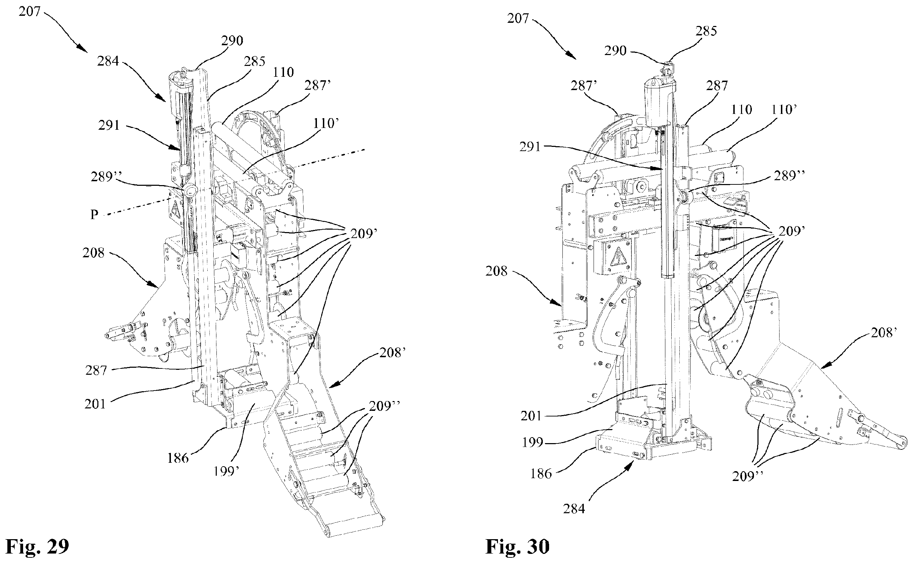

Figuren 29 und 30 zeigen eine alternative Ausgestaltung einer Kabelführungsvorrichtung 207, welche sich im wesentlichen durch zwei Dinge von der in Fig. 25 bis 28 gezeigten Ausführung unterscheidet, nämlich einerseits die Ausgestaltung von Rollenbögen 208, 208' und Längsführungsrollen 209, 209' bzw. 209" sowie andererseits eines alternativen Antriebs 291 einer Pendelschwinge 284. Deshalb werden bei der Kabelführungsvorrichtung 207 wieder entsprechende Bezugsziffern, jeweils ergänzt um die Ziffer "200" verwendet. Auch wird vor allem auf die Unterschiede eingegangen, so dass Ausführungen zu entsprechenden Teilen bei der ersten Ausführung nach Fig. 2 bis 7 sowie der zweiten Ausführung nach Fig. 8 bis 28 entsprechend auch bei der in Fig. 29 und 30 gezeigten Ausführung gelten, soweit nicht anders angegeben.

Dabei sind äußere Längsführungsrollen 209" im äußeren, unteren Bereich des Rollenbogens 208' breiter als die im Inneren, oberen Bereich des Rollenbogens 108' angeordneten inneren Längsführungsrollen 209' des Rollenbogens 208'. Dies hat den Vorteil, dass bei Ausgabe des Leitungskabels 5 nicht ganz parallel zur Fahrrichtung F des Krans 1 das Leitungskabel 5 im Außenbereich des Rollenbogens 208 etwas mehr seitlichen Versatz aufweisen kann, also eine von oben auf die Kabelführungsvorrichtung 207 gesehen leicht schräge Ausrichtung des Leitungskabels 5 zu der Längserstreckung des Rollenbogens 208' aufweisen kann. Hierzu weist der Rahmen des Rollenbogens 208' an seinem äußeren, unteren, nach außen weisenden Ende bevorzugt einen größeren Abstand zweier gegenüberliegender Wandungen, zwischen denen die Längsführungsrollen 209" befestigt sind, auf, als im Bereich der inneren, schmäleren Längsführungsrollen 209'. Der zweite, andere Rollenbogen 208 ist entsprechend seitenverkehrt ausgebildet, ansonsten gelten die Ausführungen zum Rollenbogen 208' entsprechend.

Weiter wird anstelle des in Figuren 25 bis 28 gezeigten rotatorischen Elektromotors 191 ein direkter Linearantrieb 291 zum longitudinalen Bewegen der Pendelschwinge 284 verwendet. Dabei ist die Pendelhalterung 285 etwas nach oben verlängert, wie auch das abgewinkelte Führungsblech 290. Bevorzugt kann sich der Antriebsteil des Linearantrieb 291 an dem abgewinkelte Führungsblech 290 bzw. der Pendelhalterung 285 abstützen, während eine bewegbare Kolbenstange 201 des Linearantriebs 291 an dem beweglichen Teil der Pendelschwinge 284 befestigt ist. Bevorzugt kann das abtriebsseitige Ende der Kolbenstange 201 am in Fig. 29 und 30 unteren Ende des beweglichen Teils der Pendelschwinge 284, insbesondere einer U-förmigen Führungsschienen 287 angebracht sein. Zum Hochfahren der Pendelschwinge 284 wird dann die Kolbenstange 201 nach oben bewegt.

Wie oben ausführlich beschrieben, kann mittels der Verbindungsvorrichtung 13, 113 eine einfache, automatische Verbindung des Verbindungssteckers 6, 106 des Leitungskabels 5 mit der Einspeiseeinrichtung 12, 112 ermöglich werden, ohne dass der Verbindungsstecker 6, 106 hierzu händisch ein- oder ausgesteckt werden muss. Hierzu kann nach einem weiteren Aspekt der Erfindung das Leitungskabel 5 zum besseren automatischen Verbinden einen speziellen Aufbau aufweisen. Weiter kann vorteilhaft auch der Verbindungsstecker 6, 106 speziell ausgebildet sein, um das Greifen mit dem Manipulator 18, 118 und insbesondere der Greifvorrichtung 27, 127 zu verbessern. Ebenfalls zum vereinfachten automatischen Greifen des Leitungskabels 5 bzw. des Verbindungssteckers 106 kann eine höhenverstellbare Pendelschwinge 284 vorgesehen werden. Ein weiterer Aspekt der Erfindung ermöglicht eine kabelschonende Führung des Leitungskabels 5.

Die Zustellrichtung H verläuft bevorzugt auf die Kabelführungsvorrichtung 7, 107 bzw. 207 und den Kran 1 hin bzw. von diesen weg und bevorzugt quer zur Fahrrichtung F. In einer nicht gezeigten Ausführung kann der Manipulator 18 bzw. 118 und/oder die Greifvorrichtung 27 bzw. 127 aber zusätzlich auch in Fahrrichtung F bewegbar sein, um ggf. einen Versatz in Fahrrichtung F ausgleichen zu können. Ebenso kann der Manipulator 18 bzw. 118 und/oder die Greifvorrichtung 27 bzw. 127 auch um eine vertikale Achse drehbar sein, um vorteilhaft einen Winkelversatz z.B. bei schräg stehender Kabelführungsvorrichtung 7, 107 bzw. 207 besser ausgleichen zu können.

### Bezugszeichenliste

- 1: Containerkran (E-RTG)
- 2: Container
- 3, 3': Räder
- 4: Kabeltrommel
- 5: Leitungskabel
- 6; 106: Verbindungsstecker
- 7; 107; 207: Kabelführungsvorrichtung
- 8, 8'; 108, 108'; 208, 208': Rollenbogen
- 9, 9'; 109, 109'; 209, 209', 209": Längsführungsrollen
- 10, 10', 110, 110': Seitenführungsrollen
- 11; 111: Sensoreinheit
- 12; 112: Einspeiseeinrichtung
- 13; 113: Verbindungsvorrichtung
- 14, 14'; 14", 114, 114', 114": Steckanschlüsse
- 15, 15'; 115, 115', 115": Anschlussteil (Schwenkplatte)
- 16, 16'; 116: Lagerung für Anschlussteil
- 17; 117: Befestigungsplatte
- 18; 118: Manipulator
- 19: Manipulatorbasis
- 20: unterer Manipulatorarm
- 21, 21', 21": untere Teilarme
- 22: unterer Manipulatorantrieb
- 23: kreuzförmiges Verbindungsstück
- 24: oberer Manipulatorarm
- 25, 25': obere Teilarme
- 26: oberer Manipulatorantrieb
- 27; 127: Greifvorrichtung
- 28; 128: trichterförmige Einführöffnung
- 29; 129: Signalmast
- 30; 130: Identifikatorplatte
- 31: Signalleuchte
- 32; 132: Verbindungssteckeröffnung
- 33, 33': Anschlussgehäuse
- 34, 34': Abdeckung
- 35, 35': Scharniere für Abdeckung
- 36, 36': Betätigungslaschen für Abdeckung
- 37, 37': Anschlag für Schwenkplatte
- 38, 138: Greifteil Verbindungsstecker
- 39, 139: Zentriertrichter
- 40, 140: Zentrierdorne
- 41: Außenmantel
- 42: Phasenleiter
- 43: Schutzleiter
- 44: Datenübertragungsleiter
- 45: Tragorgan
- 46: Füllmaterial, Formteile
- 47: Zugentlastung
- 148: Schaltschrank
- 149: Energieversorgungs- und Datenkabel
- 150, 150', 150": Kabeldurchführungen
- 151: Standfüße
- 152: Gabelbaum
- 153: Zentralbereich Identifikatorplatte
- 154, 154': Randbereiche Identifikatorplatte
- 155: Fundament
- 156: Grube
- 157, 157', 157": erste, bewegliche Schutzumhausungen
- 158, 158', 158", 158''': Seitenwandungen, Stirnwandung, Öffnung 1. Schutzumhausung
- 159, 159', 159": zweite, feste Schutzumhausungen
- 160, 160', 160", 160''': Seitenwandungen, Stirnwandung, Öffnung 2. Schutzumhausung
- 161, 161': Zentrierbügel
- 162, 162': vertikale Führungsbereich Zentrierbügel
- 163, 163': schräger Einführungsbereich Zentrierbügel
- 164, 164', 164": Steckerverriegelung
- 165, 165', 165": Verriegelungsbolzen
- 165a, 165a', 165a": Verriegelungsbolzen
- 166, 166', 166": länglicher Verriegelungskopf
- 167, 167', 167": Verriegelungsantrieb
- 168, 168', 168": Hebelanordnung
- 169, 169': längliche Verriegelungsöffnungen
- 170: Steckerverkleidungshälfte
- 171: U-förmiger Stützrahmen
- 172, 172': Schenkelenden
- 173: Stützrahmen-Mittelteil
- 174: kreisförmige Öffnung Stützrahmen
- 175: Außenflansch Greifteil
- 176: Spannbolzen
- 177: Spiralfeder
- 178: abgestuftes Ende des Spannbolzen
- 179: Rutschsicherung
- 180: männliche Anschlusselemente Verbindungsstecker
- 181: Anschlussträger
- 182: Schutzklappe
- 183: längliche Zentrierbolzen
- 184; 284: Pendelschwinge
- 185; 285: Pendelhalterung
- 186: Kabelführung
- 187, 187'; 287, 287': U-förmige Führungsschienen
- 188, 188': seitliche Führungsrollen
- 189, 189', 189", 189"; 289": frontale innen- und außenseitige Führungsrollen
- 190, 190'; 290: abgewinkeltes Führungsblech
- 191; 291: Elektromotor (rotatorisch), Linearantrieb
- 192: 90°-Getriebe
- 193: Zahnstange
- 194: Antriebsritzel
- 195, 195': Haltebügel
- 196, 196': Haltebügel-Drehachsen
- 197, 197': Haltefortsätze
- 198, 198': Anschlagsrollen
- 199, 199': Kabelführungsanschläge
- 200: Energiekette
- 201: Kolbenstange Linearantrieb

- D: horizontale Drehachse Anschlussteil
- F: Fahrrichtung Kran
- H: horizontale Zustellrichtung Manipulator
- P: Pendelachse Pendelschwinge
- S: Senkrechte der Pendelschwinge
- V: vertikale Zustellrichtung Manipulator

## Patentansprüche

1. Energieversorgungssystem zur kabelgebundenen Versorgung eines verfahrbaren elektrischen Verbrauchers (1) mit elektrischer Energie und/oder Daten, mit mindestens einer Einspeiseeinrichtung (12; 112) und einem damit verbindbaren Verbindungselement (6; 106) eines Leitungskabels (5) des Verbrauchers (1), wobei das Leitungskabel (5) aus einem vom Verbraucher (1) mitgeführten Reservoir (4) entsprechend eines Abstands zwischen Reservoir (4) und Einspeiseeinrichtung (12; 112) ausgebbar bzw. einholbar ist, wobei der elektrische Verbraucher (1) gegenüber der ortsfesten Einspeiseeinrichtung (12; 112) in mindestens eine Fahrrichtung (F) verfahrbar ist, wobei eine Verbindungsvorrichtung (13; 113) zur Verbindung des Verbindungselements (6; 106) des Leitungskabels (5) mit einem Anschluss (14, 14'; 114, 114', 114") der Einspeiseeinrichtung (12; 112) vorgesehen ist, wobei die Verbindungsvorrichtung (13; 113) einen Manipulator (18; 118) zum Verbinden des Verbindungselements (6; 106) mit dem Anschluss (14, 14'; 114, 114', 114") aufweist, wobei die Verbindungsvorrichtung (13; 113) an der Einspeiseeinrichtung (12; 112) angeordnet ist, **dadurch gekennzeichnet, dass** der Anschluss (14, 14'; 114, 114', 114") um mindestens eine Schwenkachse (D, D') drehbar ist.

2. Energieversorgungssystem nach Anspruch 1, **dadurch gekennzeichnet, dass** der Manipulator (18; 118) eine Greifvorrichtung (27; 127) zum Greifen des Leitungskabels (5) und/oder des Verbindungselements (6; 106) aufweist.

3. Energieversorgungssystem nach Anspruch 2, **dadurch gekennzeichnet, dass** die Greifvorrichtung (27; 127) eine insbesondere trichterförmige Einführöffnung (28; 128) für das Leitungskabel (5) und/oder das Verbindungselement (6; 106) aufweist, und/oder dass die Greifvorrichtung (27; 127) eine Arretiervorrichtung (40; 140) zum lösbaren Halten des Leitungskabels (5) und/oder des Verbindungselements (6; 106) an der Greifvorrichtung (27; 127) aufweist.

4. Energieversorgungssystem nach Anspruch 3, **dadurch gekennzeichnet, dass** die Verbindungsvorrichtung (13; 113) eine Führung aufweist, welche die Greifvorrichtung (27; 127) bei einer Bewegung des Manipulators (18; 118) in einem gegenüber dem Anschluss (14, 14'; 114, 114', 114") weitgehend gleichbleibenden Neigungswinkel hält.

5. Energieversorgungssystem nach einem der Ansprüche 1 bis 4, **dadurch gekennzeichnet, dass** die Schwenkachse (D, D') quer zur Fahrrichtung (F) bzw. einer von der Einspeiseeinrichtung (12; 112) zum verfahrbaren Verbraucher (1) verlaufenden Ablagerichtung des Leitungskabels (5) verläuft, und/oder dass die Schwenkachse (D, D') im wesentlichen parallel zu einem für die Ablage des Leitungskabels (5) vorgesehenen Boden verläuft.

6. Energieversorgungssystem nach einem der Ansprüche 1 bis 5, **dadurch gekennzeichnet, dass** die Einspeiseeinrichtung (12; 112) eine Haltevorrichtung zum Halten des Anschlusses (14, 14'; 114, 114', 114") in einer Ruhestellung aufweist.

7. Energieversorgungssystem nach Anspruch 6, **dadurch gekennzeichnet, dass** eine Rückführvorrichtung vorgesehen ist, um den Anschluss (14, 14'; 114, 114', 114") von einer aus der Ruhestellung ausgelenkten Stellung in die Ruhestellung zurück zu bewegen.

8. Energieversorgungssystem nach einem der Ansprüche 6 oder 7, **dadurch gekennzeichnet, dass** eine Anschlussarretierung zum Arretieren des Anschlusses (14, 14'; 114, 114', 114") in der Ruhestellung vorgesehen ist.

9. Energieversorgungssystem nach einem der Ansprüche 1 bis 8, **dadurch gekennzeichnet, dass** eine Steckerverriegelung (164, 164', 164", 164a', 164a', 164a") zum Verriegeln des Verbindungselements (6; 106) am Anschluss (14, 14'; 114, 114', 114") vorgesehen ist.

10. Energieversorgungssystem nach einem der Ansprüche 1 bis 9, **dadurch gekennzeichnet, dass** ein der Verbindungsvorrichtung (13; 113) oder der Einspeisevorrichtung (12; 112) zugeordnetes Positionselement (30; 130) vorgesehen ist, welches durch eine am Verbraucher angeordnete Sensoreinheit (11; 111) detektierbar ist.

11. Energieversorgungssystem nach Anspruch 10, **dadurch gekennzeichnet, dass** das Positionselement (30; 130) einen QR-Code und/oder mindestens einen reflektierenden Bereich (153, 154, 154') zur Erfassung durch die Sensoreinheit (11; 111) aufweist.

12. Energieversorgungssystem nach Anspruch 11, **dadurch gekennzeichnet, dass** das Positionselement (30; 130) in Fahrrichtung (F) des Verbrauchers zueinander versetzte reflektierende Bereiche (153, 154, 154') und/oder Bereiche mit unterschiedlichen Reflexionseigenschaften aufweist.

13. Energieversorgungssystem nach Anspruch 12, **dadurch gekennzeichnet, dass** die reflektierenden Bereiche (153, 154, 154') und/oder Bereiche mit unterschiedlichen Reflexionseigenschaften quer zur Fahrrichtung (F), insbesondere in horizontaler Zustellrichtung (H) des Manipulators (18; 118), zueinander versetzt sind.

14. Energieversorgungssystem nach einem der Ansprüche 10 bis 13, **dadurch gekennzeichnet, dass** das Positionselement (30; 130) einen, insbesondere in eine horizontale Zustellrichtung (H) des Manipulators (18; 118) vorderen, Zentralbereich (153) und mindestens einen sich daran in Fahrrichtung (F) anschließenden, gegenüber dem Zentralbereich (153) in horizontaler Zustellrichtung (H) nach hinten und/oder nach vorne versetzten Randbereich (154, 154') aufweist.

15. Energieversorgungssystem nach einem der Ansprüche 10 bis 14, **dadurch gekennzeichnet, dass** die Sensoreinheit (11; 111) eingerichtet ist, um den mindestens einen reflektierenden Bereich (153, 154, 154') zu detektieren, und/oder dass die Sensoreinheit (11; 111) zur Abstandsmessung eingerichtet ist.

16. Verfahren bei einem Energieversorgungssystem nach einem der voranstehenden Ansprüche zum Verbinden des an dem elektrischen Verbraucher (1) angeordneten Leitungskabels (5) mit der Einspeiseeinrichtung (12; 112), gegenüber welcher der Verbraucher (1) verfahrbar ist, wobei das Leitungskabel (5) aus dem vom Verbraucher (1) mitgeführten Reservoir (4) entsprechend eines Abstands zwischen Reservoir (4) und Einspeiseeinrichtung (12; 112) ausgebbar bzw. einholbar ist, **mit den folgenden Schritten:**
a) Positionieren des Verbindungselements (6; 106) des Leitungskabels (5) gegenüber der Einspeiseeinrichtung (12; 112),
b) Greifen des Verbindungselements (6; 106) und/oder des Leitungskabels (5) durch den Manipulator (18; 118) der an der Einspeisevorrichtung angeordneten Verbindungsvorrichtung (13; 113),
c) Verbinden des Verbindungselements (6; 106) mit dem Anschluss (14, 14'; 114, 114', 114") der Einspeiseeinrichtung (12; 112) mittels des Manipulators (18; 118).

## Claims

1. Energy supply system for cable-bound supply of a movable electrical consuming device (1) with electrical energy and/or data, having at least one feed device (12; 112) and a connecting element (6; 106), which is connectable thereto, of a cable (5) of the consuming device (1), wherein the cable (5) can be issued or retrieved from a reservoir (4) carried by the consuming device (1) according to a distance between reservoir (4) and feed device (12; 112), wherein the electrical consumer (1) is movable in at least one direction of travel (F) with respect to the stationary feed device (12; 112), wherein a connecting device (13; 113) is provided to connect the connecting element (6; 106) of the cable (5) to a terminal (14, 14'; 114, 114', 114") of the feed device (12; 112), wherein the connecting device (13; 113) has a manipulator (18; 118) to connect the connecting element (6; 106) to the terminal (14, 14'; 114, 114', 114"), wherein the connecting device (13; 113) is arranged at the feed device (12; 112), **characterised in that** the terminal (14, 14'; 114, 114', 114") is rotatable about at least one pivot axis (D, D').

2. Energy supply system according to claim 1, **characterised in that** the manipulator (18; 118) has a gripping device (27; 127) for gripping the cable (5) and/or the connecting element (6; 106).

3. Energy supply system according to claim 2, **characterised in that** the gripping device (27; 127) has an in particular funnel-like lead-in opening (28; 128) for the cable (5) and/or the connecting element (6; 106), and/or **in that** the gripping device (27; 127) has a locking device (40; 140) for releasable holding of the cable (5) and/or the connecting element (6; 106) on the gripping device (27; 127).

4. Energy supply system according to claim 3, **characterised in that** the connecting device (13; 113) has a guide which holds the gripping device (27; 127) during a movement of the manipulator (18; 118) at an angle of inclination which is largely constant with respect to the terminal (14, 14'; 114, 114', 114").

5. Energy supply system according to one of claims 1 to 4, **characterised in that** the pivot axis (D, D') runs transversely to the direction of travel (F) or a deposit direction of the cable (5) running from the feed device (12; 112) to the movable consuming device (1), and/or **in that** the pivot axis (D, D') runs substantially parallel to a base provided for deposit of the cable (5).

6. Energy supply system according to one of claims 1 to 5, **characterised in that** the feed device (12; 112) has a holding device to hold the terminal (14, 14'; 114, 114', 114") in a rest position.

7. Energy supply system according to claim 6, **characterised in that** a resetting device is provided in order to move the terminal (14, 14'; 114, 114', 114") from a position deflected from the rest position back into the rest position.

8. Energy supply system according to one of claims 6 or 7, **characterised in that** a terminal lock is provided to lock the terminal (14, 14'; 114, 114', 114") in the rest position.

9. Energy supply system according to one of claims 1 to 8, **characterised in that** a plug lock (164, 164', 164", 164a', 164a', 164a") is provided to lock the connecting element (6; 106) on the terminal (14, 14'; 114, 114', 114").

10. Energy supply system according to one of claims 1 to 9, **characterised in that** a position element (30; 130) assigned to the connecting device (13; 113) or the feed device (12; 112) is provided which is detectable by a sensor unit (11; 111) arranged on the consuming device.

11. Energy supply system according to claim 10, **characterised in that** the position element (30; 130) has a QR code and/or at least one reflecting region (153, 154, 154') for detection by the sensor unit (11; 111).

12. Energy supply system according to claim 11, **characterised in that** the position element (30; 130) in direction of travel (F) of the consuming device has reflecting regions (153, 154, 154') offset to one another and/or regions with different reflection properties.

13. Energy supply system according to claim 12, **characterised in that** the reflecting regions (153, 154, 154') and/or regions with different reflection properties are offset to one another transversely to the direction of travel (F), in particular in horizontal feed direction (H) of the manipulator (18; 118).

14. Energy supply system according to one of claims 10 to 13, **characterised in that** the position element (30; 130) has, in particular in a horizontal feed direction (H) of the manipulator (18; 118), a front central region (153) and at least one edge region (154, 154') connecting thereto in direction of travel (F) and offset to the rear and/or to the front in horizontal feed direction (H) with respect to the central region (153).

15. Energy supply system according to one of claims 10 to 14, **characterised in that** the sensor unit (11; 111) is equipped in order to detect the at least one reflecting region (153, 154, 154'), and/or **in that** the sensor unit (11; 111) is equipped for distance measurement.

16. Method in an energy supply system according to any one of the preceding claims for connecting the cable (5) arranged on the electrical consuming device (1) to the feed device (12; 112), with respect to which the consuming device (1) is movable, wherein the cable (5) can be issued or retrieved from the reservoir (4) carried by the consuming device (1) according to a distance between reservoir (4) and feed device (12; 112), having the following steps:
a) positioning the connecting element (6; 106) of the cable (5) with respect to the feed device (12; 112),
b) gripping the connecting element (6; 106) and/or the cable (5) by the manipulator (18; 118) of the connecting device (13; 113) arranged on the feed device,
c) connecting the connecting element (6; 106) to the terminal (14, 14'; 114, 114', 114") of the feed device (12; 112) by means of the manipulator (18; 118).

## Revendications

1. Système d'alimentation en énergie pour l'alimentation filaire d'un consommateur électrique (1) déplaçable en énergie électrique et/ou en données, avec au moins un dispositif d'injection (12 ; 112) et un élément de connexion (6 ; 106) pouvant être connecté à celui-ci d'un câble conducteur (5) du consommateur (1), dans lequel le câble conducteur (5) peut être sorti ou récupéré d'un réservoir (4) entraîné par le consommateur (1) selon une distance entre le réservoir (4) et le dispositif d'injection (12 ; 112), dans lequel le consommateur électrique (1) est déplaçable dans au moins un sens de déplacement (F) par rapport au dispositif d'injection (12 ; 112) fixe, dans lequel un dispositif de connexion (13 ; 113) pour la connexion de l'élément de connexion (6 ; 106) du câble conducteur (5) avec un raccord (14, 14' ; 114, 114', 114") du dispositif d'injection (12 ; 112) est prévu, dans lequel le dispositif de connexion (13 ; 113) présente un manipulateur (18 ; 118) pour la connexion de l'élément de connexion (6 ; 106) avec le raccord (14, 14' ; 114, 114', 114"), dans lequel le dispositif de connexion (13 ; 113) est agencé au niveau du dispositif d'injection (12 ; 112), **caractérisé en ce que** le raccord (14, 14' ; 114, 114', 114") peut tourner autour d'au moins un axe de pivotement (D, D').

2. Système d'alimentation en énergie selon la revendication 1, **caractérisé en ce que** le manipulateur (18 ; 118) présente un dispositif de préhension (27 ; 127) pour la préhension du câble conducteur (5) et/ou de l'élément de connexion (6 ; 106).

3. Système d'alimentation en énergie selon la revendication 2, **caractérisé en ce que** le dispositif de préhension (27 ; 127) présente une ouverture d'introduction (28 ; 128) en particulier en forme d'entonnoir pour le câble conducteur (5) et/ou l'élément de connexion (6 ; 106), et/ou que le dispositif de préhension (27 ; 127) présente un dispositif d'arrêt (40 ; 140) pour le maintien amovible du câble conducteur (5) et/ou de l'élément de connexion (6 ; 106) au niveau du dispositif de préhension (27 ; 127).

4. Système d'alimentation en énergie selon la revendication 3, **caractérisé en ce que** le dispositif de connexion (13 ; 113) présente un guidage qui maintient le dispositif de préhension (27 ; 127) lors d'un mouvement du manipulateur (18 ; 118) dans un angle d'inclinaison largement constant par rapport au raccord (14, 14' ; 114, 114', 114").

5. Système d'alimentation en énergie selon l'une quelconque des revendications 1 à 4, **caractérisé en ce que** l'axe de pivotement (D, D') s'étend transversalement au sens de déplacement (F) ou un sens de dépôt du câble conducteur (5) s'étendant du dispositif d'injection (12 ; 112) au consommateur déplaçable (1), et/ou que l'axe de pivotement (D, D') s'étend sensiblement parallèlement à un sol prévu pour le dépôt du câble conducteur (5).

6. Système d'alimentation en énergie selon l'une quelconque des revendications 1 à 5, **caractérisé en ce que** le dispositif d'injection (12 ; 112) présente un dispositif de maintien pour le maintien du raccord (14, 14' ; 114, 114', 114") dans une position de repos.

7. Système d'alimentation en énergie selon la revendication 6, **caractérisé en ce qu'**un dispositif de retour est prévu afin de redéplacer le raccord (14, 14' ; 114, 114', 114") d'une position déviée de la position de repos à la position de repos.

8. Système d'alimentation en énergie selon l'une quelconque des revendications 6 ou 7, **caractérisé en ce qu'**un arrêt de raccord est prévu pour l'arrêt du raccord (14, 14' ; 114, 114', 114") dans la position de repos.

9. Système d'alimentation en énergie selon l'une quelconque des revendications 1 à 8, **caractérisé en ce qu'**un verrouillage de prise (164, 164', 164", 164a', 164a', 164a") est prévu pour le verrouillage de l'élément de connexion (6 ; 106) au niveau du raccord (14, 14' ; 114, 114', 114").

10. Système d'alimentation en énergie selon l'une quelconque des revendications 1 à 9, **caractérisé en ce qu'**un élément de position (30 ; 130) associé au dispositif de connexion (13 ; 113) ou au dispositif d'injection (12 ; 112) est prévu, lequel peut être détecté par une unité de capteur (11 ; 111) agencée au niveau du consommateur.

11. Système d'alimentation en énergie selon la revendication 10, **caractérisé en ce que** l'élément de position (30 ; 130) présente un code QR et/ou au moins une zone réfléchissante (153, 154, 154') pour la détection par l'unité de capteur (11 ; 111).

12. Système d'alimentation en énergie selon la revendication 11, **caractérisé en ce que** l'élément de position (30 ; 130) présente des zones réfléchissantes (153, 154, 154') décalées les unes des autres dans le sens de déplacement (F) du consommateur et/ou des zones avec différentes propriétés de réflexion.

13. Système d'alimentation en énergie selon la revendication 12, **caractérisé en ce que** les zones réfléchissantes (153, 154, 154') et/ou des zones avec différentes propriétés de réflexion sont décalées les unes des autres transversalement au sens de déplacement (F), en particulier dans le sens d'avance horizontal (H) du manipulateur (18 ; 118).

14. Système d'alimentation en énergie selon l'une quelconque des revendications 10 à 13, **caractérisé en ce que** l'élément de position (30 ; 130) présente une zone centrale (153) en particulier avant dans un sens d'avance horizontal (H) du manipulateur (18 ; 118) et au moins une zone de bord (154, 154') décalée vers l'arrière et/ou vers l'avant par rapport à la zone centrale (153) dans le sens d'avance horizontal (H), raccordée à celle-ci dans le sens de déplacement (F).

15. Système d'alimentation en énergie selon l'une quelconque des revendications 10 à 14, **caractérisé en ce que** l'unité de capteur (11 ; 111) est aménagée afin de détecter l'au moins une zone réfléchissante (153, 154, 154') et/ou que l'unité de capteur (11 ; 111) est aménagée pour la mesure de distance.

16. Procédé pour un système d'alimentation en énergie selon l'une quelconque des revendications précédentes de connexion du câble conducteur (5) agencé au niveau du consommateur électrique (1) avec le dispositif d'injection (12 ; 112) par rapport auquel le consommateur (1) est déplaçable, dans lequel le câble conducteur (5) peut être sorti ou récupéré du réservoir (4) entraîné par le consommateur (1) selon une distance entre le réservoir (4) et le dispositif d'injection (12 ; 112), avec les étapes suivantes :
a) positionnement de l'élément de connexion (6 ; 106) du câble conducteur (5) par rapport au dispositif d'injection (12 ; 112),
b) préhension de l'élément de connexion (6 ; 106) et/ou du câble conducteur (5) par le manipulateur (18 ; 118) du dispositif de connexion (13 ; 113) agencé au niveau du dispositif d'injection,
c) connexion de l'élément de connexion (6 ; 106) avec le raccord (14, 14' ; 114, 114', 114") du dispositif d'injection (12 ; 112) au moyen du manipulateur (18 ; 118).
